(19) Europäisches Patentamt
European Patent Office
Office européen des brevets

(11) EP 3 079 397 A1

(12) **EUROPEAN PATENT APPLICATION**
published in accordance with Art. 153(4) EPC

(43) Date of publication:
**12.10.2016 Bulletin 2016/41**

(21) Application number: **13900493.1**

(22) Date of filing: **24.12.2013**

(51) Int Cl.:
***H04W 24/10*** *(2009.01)*

(86) International application number:
**PCT/CN2013/090367**

(87) International publication number:
**WO 2015/096046 (02.07.2015 Gazette 2015/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd.**
**Longgang District**
**Shenzhen, Guangdong 518129 (CN)**

(72) Inventors:
- **WANG, Zongjie**
  **Shenzhen**
  **Guangdong 518129 (CN)**
- **ZHANG, Peng**
  **Shenzhen**
  **Guangdong 518129 (CN)**
- **HUANG, Yi**
  **Hefei**
  **Anhui 230027 (CN)**
- **CHU, Jingxing**
  **Hefei**
  **Anhui 230027 (CN)**
- **QIU, Ling**
  **Hefei**
  **Anhui 230027 (CN)**

(74) Representative: **Gill Jennings & Every LLP**
**The Broadgate Tower**
**20 Primrose Street**
**London EC2A 2ES (GB)**

(54) **METHOD FOR ADJUSTING SCHEDULING WEIGHT**

(57) This application relates to the field of wireless communications technologies, and in particular, to a schedule weight adjustment method, where the method is applied to a High Speed Downlink Packet Access heterogeneous network HSDPA Het-Net system. The method includes: acquiring, by a first base station, a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier; determining, by the first base station according to the first CQI and the first TBS, whether a service rate obtained from the second base station by the user equipment is greater than a service rate obtained from the first base station, and obtaining a determining result; and adjusting, by the first base station, a schedule weight of the user equipment in the first base station according to the determining result.

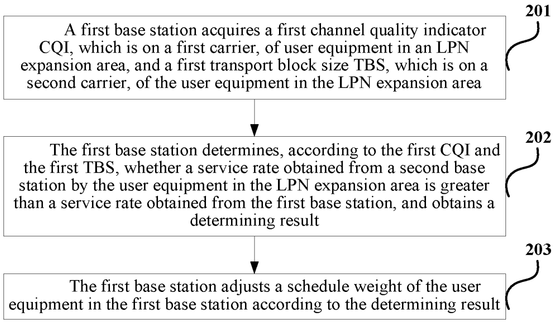


FIG. 2

EP 3 079 397 A1

## Description

### TECHNICAL FIELD

The present invention relates to the field of wireless communications technologies, and in particular, to a schedule weight adjustment method.

### BACKGROUND

As intelligent terminals constantly emerge, and mobile Internet technologies quickly develop, people have a higher requirement on wireless communication rates. Especially, in the fast-paced work and life nowadays, people urgently hope to enjoy high-speed communication services anytime and anywhere. However, an existing technology is far from meeting the requirement of people on mobile communications in the future. In addition, the spectral efficiency of a point to point link of an existing cellular network has gradually approached a theory limit. Therefore, it is very difficult to cope with the requirement on future mobile communications by relying only on an existing network structure. To reconcile a conflict between a constantly growing wireless mobile service requirement of people and a limited transmission capability of the existing cellular network, as a popular cost-effective hotspot coverage, expansion coverage, and hole coverage solution, a heterogeneous network (Het-Net, Heterogeneous Network) technology, that is, adding a new low power node (Low Power Node, LPN) to the conventional cellular network, comes into being. By reducing cell coverage and a transmission distance, the technology can effectively improve the spectral efficiency, and alleviate a problem, with which the existing cellular network is faced, of an explosive increase in mobile data services. An existing research shows that after the LPN is introduced, even if no other technology is used, outage probability does not obviously deteriorate, and throughput can be improved as a quantity of LPNs linearly grows.

A UMTS HSDPA (Universal Mobile Telecommunications System High Speed Downlink Packet Access, Universal Mobile Telecommunications System High Speed Downlink Packet Access) system has been very successful in terms of commercial application. An HS-DSCH (High Speed Downlink Shared Channel, high speed downlink shared channel) is introduced downlink to HSDPA, which greatly improves a system transmission rate and enhances user experience. By using an adaptive modulation and coding (Adaptive Modulation and Coding, AMC) technology, a hybrid automatic repeat request (Hybrid Automatic Repeat-Request, HARQ) technology, a quick scheduling technology, a multiple input multiple output (Multiple Input Multiple Output, MIMO) technology, and the like, the HSDPA system can improve a downlink peak transmission rate and an average system throughput rate. It should be noted that application of a multiflow and multi-carrier technology in the HSDPA gradually becomes mature, and it can further improve performance of the HSDPA system.

To meet a higher rate requirement of a user and to use existing network resources more effectively, introducing the Het-Net technology to the HSDPA is undoubtedly an efficient method, and has relatively high application value. However, introducing the Het-Net technology to the HSDPA faces a great challenge. A main problem is that a transmit power of an LPN is relatively small; therefore, coverage of the LPN (which is the same as a micro base station) is relatively small, and a cell splitting gain is insufficient. To increase the cell splitting gain, an effective method is introducing a cell offset (cell biasing) to user access criteria. Introducing the cell offset can effectively expand coverage of a micro cell; however, it brings a problem that a link status of user equipment in an LPN expansion area is poorer than that of the user equipment when the user equipment accesses a macro cell, causing limited performance of the user equipment in the LPN expansion area.

### SUMMARY

The present invention provides a schedule weight adjustment method, which is used to resolve a technical problem in the prior art that after a cell offset is introduced to an HSDPA Het-Net, a link status of an LPN user in an expansion area is poorer than that of the LPN user when the LPN user accesses a macro cell, and limited performance may be caused.

According to a first aspect, a schedule weight adjustment method is provided, applied to a High Speed Downlink Packet Access heterogeneous network HSDPA Het-Net system, where the method includes:

acquiring, by a first base station, a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier;

determining, by the first base station according to the first CQI and the first TBS, whether a service rate obtained

from the second base station by the user equipment is greater than a service rate obtained from the first base station, and obtaining a determining result; and
adjusting, by the first base station, a schedule weight of the user equipment in the first base station according to the determining result.

With reference to the first aspect, in a first possible implementation manner of the first aspect, the adjusting, by the first base station, a schedule weight of the user equipment in the first base station according to the determining result includes:

if the service rate obtained from the second base station by the user equipment is greater than the service rate obtained from the first base station, decreasing, by the first base station, the schedule weight of the user equipment in the first base station; or
if the service rate obtained from the second base station by the user equipment is not greater than the service rate obtained from the first base station, increasing, by the first base station, the schedule weight of the user equipment in the first base station.

With reference to the first aspect or the first possible implementation manner of the first aspect, in a second possible implementation manner of the first aspect, when the cell offset is set on the first carrier, the first base station is a micro base station, and the second base station is a macro base station; and
when the cell offset is set on the second carrier, the second base station is a micro base station, and the first base station is a macro base station.
With reference to the first aspect, the first possible implementation manner of the first aspect, or the second possible implementation manner of the first aspect, in a third possible implementation manner of the first aspect, the determining, by the first base station according to the first CQI and the first TBS, whether a service rate obtained from the second base station by the user equipment is greater than a service rate obtained from the first base station includes:

determining, by the first base station, a schedule weight adjustment parameter of the user equipment according to the first CQI and the first TBS; and
determining, by the first base station according to the schedule weight adjustment parameter, whether the service rate obtained from the second base station by the user equipment is greater than the service rate obtained from the first base station.

With reference to the third possible implementation manner of the first aspect, in a fourth possible implementation manner of the first aspect, the determining, by the first base station according to the schedule weight adjustment parameter, whether the service rate obtained from the second base station by the user equipment is greater than the service rate obtained from the first base station includes:

when the schedule weight adjustment parameter is less than a first preset parameter, determining, by the first base station, that the service rate obtained from the second base station by the user equipment in the LPN expansion area is not greater than the service rate obtained from the first base station; and
when the schedule weight adjustment parameter is greater than a second preset parameter, determining, by the first base station, that the service rate obtained from the second base station by the user equipment in the LPN expansion area is greater than the service rate obtained from the first base station, where the second preset parameter is greater than or equal to the first preset parameter.

With reference to the third possible implementation manner of the first aspect or the fourth possible implementation manner of the first aspect, in a fifth possible implementation manner of the first aspect, the determining, by the first base station, a schedule weight adjustment parameter of the user equipment in the LPN expansion area according to the first CQI and the first TBS includes:

determining, by the first base station based on the first CQI, a reachable rate, which is on the first carrier, of the user equipment;
determining, by the first base station based on the first TBS, an average throughput rate, which is on the second carrier, of the user equipment; and
determining, by the first base station, the schedule weight adjustment parameter based on the average throughput rate and the reachable rate.

With reference to the fifth possible implementation manner of the first aspect, in a sixth possible implementation

manner of the first aspect, the first base station determines the schedule weight adjustment parameter based on the following formula:

$$swap = \tilde{r}_{k,2} / \overline{c}_{k,1},$$

where

swap is the schedule weight adjustment parameter, $\overline{c}_{k,1}$ is the reachable rate, which is on the first carrier, of the user equipment, and $\tilde{r}_{k,2}$ is the average throughput rate, which is on the second carrier, of the user equipment.

With reference to the fifth possible implementation manner of the first aspect, in a seventh possible implementation manner of the first aspect, the first base station determines the schedule weight adjustment parameter according to the following formula:

$$swap = \frac{\frac{1}{L} - p_k}{\frac{1}{L}} = \left(\frac{1}{L}\sum_k \frac{\tilde{r}_{k,2}}{\overline{c}_{k,1}}\right)^{-1} \cdot L \cdot \frac{\tilde{r}_{k,2}}{\overline{c}_{k,1}} - 1,$$

where

swap is the schedule weight adjustment parameter, $\overline{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set U that includes the user equipment.

With reference to the seventh possible implementation manner of the first aspect, in an eighth possible implementation manner of the first aspect, the first base station determines, based on the following formula, the probability of scheduling the user equipment by the first base station:

$$\begin{cases} p_k = \left[\frac{1}{\lambda} - \frac{\tilde{r}_{k,2}}{\overline{c}_{k,1}}\right]^+, & k \in U \\ \sum_{k=1}^{L} p_k = 1 \end{cases},$$

where

$\overline{c}_{k,1}$ is the reachable rate, which is on the first carrier, of the user equipments, $\tilde{r}_{k,2}$ is the average throughput rate, which is on the second carrier, of the user equipment, $p_k$ is the probability of scheduling the user equipment by the first base station, and L is a total quantity of user equipments in a set U that includes the user equipment.

With reference to any one of the fifth to eighth possible implementation manners of the first aspect, in a ninth possible implementation manner of the first aspect, the determining, by the first base station based on the first CQI, a reachable rate, which is on the first carrier, of the user equipment in the LPN expansion area includes:

obtaining, by the first base station according to the first CQI, a second TBS that corresponds to the first CQI;
determining, by the first base station based on the second TBS, an average second TBS, which is on the first carrier, of the user equipment in the LPN expansion area;
acquiring, by the first base station, a unit time length of a subframe; and
determining, by the first base station, the reachable rate based on the average second TBS and the unit time length of the subframe.

With reference to the ninth possible implementation manner of the first aspect, in a tenth possible implementation manner of the first aspect, the first base station determines the reachable rate based on the following formula:

$$\overline{c}_{k,1} = \frac{\overline{x}_{k,1}}{T_{SF}},$$

where
$\overline{c}_{k,1}$ is the reachable rate, which is on the first carrier, of the user equipments, $\overline{x}_{k,1}$ is the average second TBS, which is on the first carrier, of the user equipment, and $T_{SF}$ is the unit time length of the subframe.

With reference to any one of the first to tenth possible implementation manners of the first aspect, in an eleventh possible implementation manner of the first aspect, the first base station decreases the schedule weight of the user equipment in the first base station in the LPN expansion area according to the following formula:

$$w_k = \max(w_k \cdot \beta,\ 1),\quad 0 < \beta < 1;$$

or

$$w_k = w_k \cdot \beta,\quad 0 < \beta < 1,$$

where
$w_k$ is the schedule weight of the user equipment in the LPN expansion area.

With reference to any one of the first to tenth possible implementation manners of the first aspect, in a twelfth possible implementation manner of the first aspect, the first base station increases the schedule weight of the user equipment in the first base station in the LPN expansion area according to the following formula:

$$w_k = w_k / \beta,\quad 0 < \beta < 1,$$

where
$w_k$ is the schedule weight of the user equipment in the LPN expansion area.

With reference to any one of the foregoing possible implementation manners of the first aspect, in a thirteenth possible implementation manner of the first aspect, when the first base station is a macro base station, and the second base station is a micro base station, the acquiring, by a first base station, a first transport block size TBS, which is on a second carrier, of the user equipment in the LPN expansion area includes:

receiving, by the macro base station, the first TBS, which is sent by the user equipment, of the user equipment on a high speed downlink shared control channel HS-SCCH on the second carrier; and/or
acquiring, by the macro base station, a second CQI, which is on the second carrier, of the user equipment, and acquiring a TBS of the user equipment from the second CQI; and receiving, by the macro base station, a difference TBS, which is sent by the user equipment, of the user equipment on the HS-SCCH on the second carrier, where the difference TBS is a difference between the first TBS and the TBS of the user equipment in the second CQI, and determining, by the macro base station, the first TBS according to a difference between the TBS of the user equipment in the second CQI and the TBS.

Based on a same inventive concept, according to a second aspect, a first base station is provided, applied to a High Speed Downlink Packet Access heterogeneous network HSDPA Het-Net system, including:

an acquiring unit, configured to acquire a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier;
a judging unit, configured to receive the first CQI and the first TBS from the acquiring unit, determine, according to

the first CQI and the first TBS, whether a service rate obtained from the second base station by the user equipment is greater than a service rate obtained from the first base station, and obtain a determining result; and
an adjustment unit, configured to receive the determining result from the judging unit, and adjust a schedule weight of the user equipment in the first base station according to the determining result.

With reference to the second aspect, in a first possible implementation manner of the second aspect, the adjustment unit includes:

a decreasing module, configured to: if the service rate obtained from the second base station by the user equipment is greater than the service rate obtained from the first base station, decrease the schedule weight of the user equipment in the first base station; and
an increasing module, configured to: if the service rate obtained from the second base station by the user equipment is not greater than the service rate obtained from the first base station, increase the schedule weight of the user equipment in the first base station.

With reference to the second aspect or the first possible implementation manner of the second aspect, in a second possible implementation manner of the second aspect, when the cell offset is set on the first carrier, the first base station is a micro base station, and the second base station is a macro base station; when the cell offset is set on the second carrier, the second base station is a micro base station, and the first base station is a macro base station.

With reference to the second aspect, the first possible implementation manner of the second aspect, or the second possible implementation manner of the second aspect, in a third possible implementation manner of the second aspect, the judging unit includes:

a determining module, configured to determine a schedule weight adjustment parameter of the user equipment according to the first CQI and the first TBS; and
a judging module, configured to determine, according to the schedule weight adjustment parameter, whether the service rate obtained from the second base station by the user equipment is greater than the service rate obtained from the first base station.

With reference to the third possible implementation manner of the second aspect, in a fourth possible implementation manner of the second aspect, the judging module is further configured to:

when the schedule weight adjustment parameter is less than a first preset parameter, determine that the service rate obtained from the second base station by the user equipment in the LPN expansion area is not greater than the service rate obtained from the first base station; and when the schedule weight adjustment parameter is greater than a second preset parameter, determine that the service rate obtained from the second base station by the user equipment in the LPN expansion area is greater than the service rate obtained from the first base station, where the second preset parameter is greater than or equal to the first preset parameter.

With reference to the third possible implementation manner of the second aspect or the fourth possible implementation manner of the second aspect, in a fifth possible implementation manner of the second aspect, the determining module is configured to:

determine a reachable rate, which is on the first carrier, of the user equipment based on the first CQI; determine an average throughput rate, which is on the second carrier, of the user equipment based on the first TBS; and determine the schedule weight adjustment parameter based on the average throughput rate and the reachable rate.

With reference to the fifth possible implementation manner of the second aspect, in a sixth possible implementation manner of the second aspect, the determining module determines the schedule weight adjustment parameter based on the following formula:

$$swap = \tilde{r}_{k,2} / \overline{c}_{k,1},$$

where
swap is the schedule weight adjustment parameter, $\overline{c}_{k,1}$ is the reachable rate, which is on the first carrier, of the user

equipment, and $\tilde{r}_{k,2}$ is the average throughput rate, which is on the second carrier, of the user equipment.

With reference to the fifth possible implementation manner of the second aspect, in a seventh possible implementation manner of the second aspect, the determining module determines the schedule weight adjustment parameter according to the following formula:

$$\text{swap} = \frac{\frac{1}{L} - p_k}{\frac{1}{L}} = \left(\frac{1}{L}\sum_k \frac{\tilde{r}_{k,2}}{\bar{c}_{k,1}}\right)^{-1} \cdot L \cdot \frac{\tilde{r}_{k,2}}{\bar{c}_{k,1}} - 1,$$

where

swap is the schedule weight adjustment parameter, $\bar{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set U that includes the user equipment.

With reference to the seventh possible implementation manner of the second aspect, in an eighth possible implementation manner of the second aspect, the determining module determines, based on the following formula, the probability of scheduling the user equipment by the first base station:

$$\begin{cases} p_k = \left[\frac{1}{\lambda} - \frac{\tilde{r}_{k,2}}{\bar{c}_{k,1}}\right]^+, & k \in U \\ \sum_{k=1}^{L} p_k = 1 \end{cases},$$

where

$\bar{c}_{k,1}$ is the reachable rate, which is on the first carrier, of the user equipments, $\tilde{r}_{k,2}$ is the average throughput rate, which is on the second carrier, of the user equipment, $p_k$ is the probability of scheduling the user equipment by the first base station, and L is a total quantity of user equipments in a set U that includes the user equipment.

With reference to any one of the fifth to eighth possible implementation manners of the second aspect, in a ninth possible implementation manner of the second aspect, the determining module is further configured to:

obtain, according to the first CQI, a second TBS that corresponds to the first CQI; determine an average second TBS, which is on the first carrier, of the user equipment in the LPN expansion area based on the second TBS; acquire a unit time length of a subframe; and determine the reachable rate based on the average second TBS and the unit time length of the subframe.

With reference to the ninth possible implementation manner of the second aspect, in a tenth possible implementation manner of the second aspect, the determining module determines the reachable rate based on the following formula:

$$\bar{c}_{k,1} = \frac{\bar{x}_{k,1}}{T_{SF}},$$

where

$\bar{c}_{k,1}$ is the reachable rate, which is on the first carrier, of the user equipments, $\bar{x}_{k,1}$ is the average second TBS, which is on the first carrier, of the user equipment, and $T_{SF}$ is the unit time length of the subframe.

With reference to any one of the first to tenth possible implementation manners of the second aspect, in an eleventh possible implementation manner of the second aspect, the decreasing module decreases the schedule weight of the user equipment in the first base station in the LPN expansion area according to the following formula:

$$w_k = \max(w_k \cdot \beta,\ 1), \quad 0 < \beta < 1;$$

or

$$w_k = w_k \cdot \beta, \quad 0 < \beta < 1,$$

where

$w_k$ is the schedule weight of the user equipment in the LPN expansion area.

With reference to any one of the first to tenth possible implementation manners of the second aspect, in a twelfth possible implementation manner of the second aspect, the increasing module increases the schedule weight of the user equipment in the first base station in the LPN expansion area according to the following formula:

$$w_k = w_k / \beta, \quad 0 < \beta < 1,$$

where

$w_k$ is the schedule weight of the user equipment in the LPN expansion area.

With reference to any one of the foregoing possible implementation manners of the second aspect, in a thirteenth possible implementation manner of the second aspect, when the first base station is a macro base station, and the second base station is a micro base station, the acquiring unit includes:

a first acquiring module, configured to receive the first TBS, which is sent by the user equipment, of the user equipment on a high speed downlink shared control channel HS-SCCH on the second carrier; and/or

a second acquiring module, configured to acquire a second CQI, which is on the second carrier, of the user equipment, and acquire a TBS of the user equipment from the second CQI; and receive a difference TBS, which is sent by the user equipment, of the user equipment on the HS-SCCH on the second carrier, where the difference TBS is a difference between the first TBS and the TBS of the user equipment in the second CQI, and determine the first TBS according to a difference between the TBS of the user equipment in the second CQI and the TBS.

Based on a same inventive concept, according to a third aspect, a first base station is provided, applied to a High Speed Downlink Packet Access heterogeneous network HSDPA Het-Net system, including:

a transceiver, configured to acquire a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier; and

a processor, connected to the transceiver, configured to determine, according to the first CQI and the first TBS, whether a service rate obtained from the second base station by the user equipment is greater than a service rate obtained from the first base station, and obtain a determining result; and adjust a schedule weight of the user equipment in the first base station according to the determining result.

With reference to the third aspect, in a first possible implementation manner of the third aspect, the processor is further configured to:

if the service rate obtained from the second base station by the user equipment is greater than the service rate obtained from the first base station, decrease the schedule weight of the user equipment in the first base station; or if the service rate obtained from the second base station by the user equipment is not greater than the service rate obtained from the first base station, increase the schedule weight of the user equipment in the first base station.

With reference to the third aspect or the first possible implementation manner of the third aspect, in a second possible implementation manner of the third aspect, when the cell offset is set on the first carrier, the first base station is a micro base station, and the second base station is a macro base station; when the cell offset is set on the second carrier, the second base station is a micro base station, and the first base station is a macro base station.

With reference to the third aspect, the first possible implementation manner of the third aspect, or the second possible implementation manner of the third aspect, in a third possible implementation manner of the third aspect, the

processor is further configured to:

determine a schedule weight adjustment parameter of the user equipment according to the first CQI and the first TBS; and determine, according to the schedule weight adjustment parameter, whether the service rate obtained from the second base station by the user equipment is greater than the service rate obtained from the first base station.

With reference to the third possible implementation manner of the third aspect, in a fourth possible implementation manner of the third aspect, the processor is further configured to:

when the schedule weight adjustment parameter is less than a first preset parameter, determine that the service rate obtained from the second base station by the user equipment in the LPN expansion area is not greater than the service rate obtained from the first base station; and when the schedule weight adjustment parameter is greater than a second preset parameter, determine that the service rate obtained from the second base station by the user equipment in the LPN expansion area is greater than the service rate obtained from the first base station, where the second preset parameter is greater than or equal to the first preset parameter.

With reference to the third possible implementation manner of the third aspect or the fourth possible implementation manner of the third aspect, in a fifth possible implementation manner of the third aspect, the processor is further configured to:

determine a reachable rate, which is on the first carrier, of the user equipment based on the first CQI; determine an average throughput rate, which is on the second carrier, of the user equipment based on the first TBS; and determine the schedule weight adjustment parameter based on the average throughput rate and the reachable rate.

With reference to the fifth possible implementation manner of the third aspect, in a sixth possible implementation manner of the third aspect, the processor determines the schedule weight adjustment parameter based on the following formula:

$$\mathrm{swap} = \tilde{r}_{k,2} \,/\, \overline{c}_{k,1},$$

where
swap is the schedule weight adjustment parameter, $\overline{c}_{k,1}$ is the reachable rate, which is on the first carrier, of the user equipment, and $\tilde{r}_{k,2}$ is the average throughput rate, which is on the second carrier, of the user equipment.

With reference to the fifth possible implementation manner of the third aspect, in a seventh possible implementation manner of the third aspect, the processor determines the schedule weight adjustment parameter according to the following formula:

$$\mathrm{swap} = \frac{\frac{1}{L} - p_k}{\frac{1}{L}} = \left(\frac{1}{L}\sum_k \frac{\tilde{r}_{k,2}}{\overline{c}_{k,1}}\right)^{-1} \cdot L \cdot \frac{\tilde{r}_{k,2}}{\overline{c}_{k,1}} - 1,$$

where
swap is the schedule weight adjustment parameter, $\overline{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set U that includes the user equipment.

With reference to the seventh possible implementation manner of the third aspect, in an eighth possible implementation manner of the third aspect, the processor determines, based on the following formula, the probability of scheduling the user equipment by the first base station:

$$\begin{cases} p_k = \left[\frac{1}{\lambda} - \frac{\tilde{r}_{k,2}}{\bar{c}_{k,1}}\right]^+, \quad k \in U \\ \sum_{k=1}^{L} p_k = 1 \end{cases},$$

where

$\bar{c}_{k,1}$ is the reachable rate, which is on the first carrier, of the user equipments, is the average throughput rate, which is on the second carrier, of the user equipment, $p_k$ is the probability of scheduling the user equipment by the first base station, and L is a total quantity of user equipments in a set U that includes the user equipment.

With reference to any one of the fifth to eighth possible implementation manners of the third aspect, in a ninth possible implementation manner of the third aspect, the processor is further configured to:

obtain, according to the first CQI, a second TBS that corresponds to the first CQI; determine an average second TBS, which is on the first carrier, of the user equipment in the LPN expansion area based on the second TBS; acquire a unit time length of a subframe; and determine the reachable rate based on the average second TBS and the unit time length of the subframe.

With reference to the ninth possible implementation manner of the third aspect, in a tenth possible implementation manner of the third aspect, the processor determines the reachable rate based on the following formula:

$$\bar{c}_{k,1} = \frac{\bar{x}_{k,1}}{T_{SF}},$$

where

$\bar{c}_{k,1}$ is the reachable rate, which is on the first carrier, of the user equipments, $\bar{x}_{k,1}$ is the average second TBS, which is on the first carrier, of the user equipment, and $T_{SF}$ is the unit time length of the subframe.

With reference to any one of the first to tenth possible implementation manners of the third aspect, in an eleventh possible implementation manner of the third aspect, the processor decreases the schedule weight of the user equipment in the first base station in the LPN expansion area according to the following formula:

$$w_k = \max(w_k \cdot \beta,\ 1), \quad 0 < \beta < 1;$$

or

$$w_k = w_k \cdot \beta, \quad 0 < \beta < 1,$$

where

$w_k$ is the schedule weight of the user equipment in the LPN expansion area.

With reference to any one of the first to tenth possible implementation manners of the third aspect, in a twelfth possible implementation manner of the third aspect, the processor increases the schedule weight of the user equipment in the first base station in the LPN expansion area according to the following formula:

$$w_k = w_k / \beta, \quad 0 < \beta < 1,$$

where

$w_k$ is the schedule weight of the user equipment in the LPN expansion area.

With reference to any one of the foregoing possible implementation manners of the third aspect, in a thirteenth

possible implementation manner of the third aspect, when the first base station is a macro base station, and the second base station is a micro base station, the processor is further configured to:

receive the first TBS, which is sent by the user equipment, of the user equipment on a high speed downlink shared control channel HS-SCCH on the second carrier; and/or
acquire a second CQI, which is on the second carrier, of the user equipment by using the transceiver, and acquire a TBS of the user equipment from the second CQI; and receive a difference TBS, which is sent by the user equipment, of the user equipment on the HS-SCCH on the second carrier by using the transceiver, where the difference TBS is a difference between the first TBS and the TBS of the user equipment in the second CQI, and determine the first TBS according to a difference between the TBS of the user equipment in the second CQI and the TBS.

The technical solutions of the embodiments of this application have the following advantageous effects:

The schedule weight adjustment method in the embodiments of the present invention is applied to a High Speed Downlink Packet Access heterogeneous network HSDPA Het-Net system, and includes: acquiring, by a first base station, a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier; determining, by the first base station according to the first CQI and the first TBS, whether a service rate obtained from the second base station by the user equipment is greater than a service rate obtained from the first base station, and obtaining a determining result; and adjusting, by the first base station, a schedule weight of the user equipment in the first base station according to the determining result, where when the cell offset is set on the first carrier, the first base station is a micro base station, and the second base station is a macro base station. When the cell offset is set on the second carrier, the second base station is a micro base station, and the first base station is a macro base station.

For the user equipment in the LPN expansion area, in the schedule weight adjustment method used by the first base station, in addition to quality of a radio channel between the user equipment in the LPN expansion area and the first base station, quality of a service provided by a second base station to the user equipment in the LPN expansion area is further considered. A schedule weight, in the first base station and/or the second base station, of a user equipment in the LPN expansion area is flexibly adjusted, which can flexibly compensate a user equipment, whose performance is limited, in the LPN expansion area. Therefore, a technical problem in the prior art that after a cell offset is introduced to an HSDPA Het-Net, a link status of an LPN user in an expansion area is poorer than that of the LPN user when the LPN user accesses a macro cell, and limited performance may be caused is resolved, and a technical effect of ensuring that the user equipment in the LPN expansion area has a good link status is implemented.

## BRIEF DESCRIPTION OF DRAWINGS

FIG. 1 is a schematic diagram after a cell offset is introduced to an HSDPA Het-Net system according to an embodiment of the present invention;
FIG. 2 is a flowchart of a schedule weight adjustment method according to Embodiment 1 of the present invention;
FIG. 3 is a detailed flowchart of step 202 according to Embodiment 1 of the present invention;
FIG. 4 is a detailed flowchart of step 301 according to Embodiment 1 of the present invention;
FIG. 5 is a detailed flowchart of step 401 according to Embodiment 1 of the present invention;
FIG. 6 is a schematic structural diagram of a first base station according to Embodiment 2 of the present invention; and
FIG. 7 is a schematic structural diagram of a first base station according to Embodiment 3 of the present invention.

## DESCRIPTION OF EMBODIMENTS

To make the objectives, technical solutions, and advantages of the embodiments of this application more clearly, the following clearly describes the technical solutions in the embodiments of this application with reference to the accompanying drawings in the embodiments of this application. Apparently, the described embodiments are merely a part rather than all of the embodiments of this application. All other embodiments obtained by persons of ordinary skill in the art based on the embodiments of this application without creative efforts shall fall within the protection scope of this application.

It should be first noted that, the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Secondly, it should be noted that, when a cell offset is set on a first carrier, a first base station is a micro base station, and a second base station is a macro base station. When the cell offset is set on a second carrier, the second base station is a micro base station, and the first base station is a macro base station.

Further, it should be noted that the term "micro base station" that appears in the specification is an LPN (Low Power Node, low power node).

Still further, it should be noted that the term "user equipment" that appears in the specification refers to a wireless terminal in an LPN expansion area. The wireless terminal may refer to a device that provides a user with voice and/or data connectivity, a handheld device with a wireless connection function, or another processing device connected to a wireless modem. The wireless terminal may communicate with one or more core networks through a radio access network (such as RAN, Radio Access Network). The wireless terminal may be a mobile terminal, such as a mobile phone (also referred to as a "cellular" phone) and a computer with a mobile terminal, for example, may be a portable, pocket-sized, handheld, computer built-in, or in-vehicle mobile apparatus, which exchanges voice and/or data with the radio access network. For example, it may be a device such as a personal communication service (PCS, Personal Communication Service) phone, a cordless telephone set, a Session Initiation Protocol (SIP) phone, a wireless local loop (WLL, Wireless Local Loop) station, or a personal digital assistant (PDA, Personal Digital Assistant). The wireless terminal may also be called a system, a subscriber unit (Subscriber Unit), a subscriber station (Subscriber Station), a mobile station (Mobile Station), a mobile terminal (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

## Embodiment 1

This embodiment provides a schedule weight adjustment method, applied to a process of scheduling user equipment in an LPN expansion area after a cell offset is introduced to an HSDPA Het-Net system. Before the schedule weight adjustment method is described, the HSDPA Het-Net system to which the cell offset is introduced is described first. As shown in FIG. 1, the HSDPA Het-Net system includes a macro base station and a micro base station (that is, an LPN), where a macro cell of the macro base station includes a micro cell (that is, an LPN cell) of the micro base station, the macro base station provides a carrier A in the macro cell, the micro base station provides a carrier B in the micro cell, and an LPN expansion area is formed by setting the cell offset on the carrier B. As shown in FIG. 1, the LPN expansion area is an area between a dashed line and a dash-dot line. User equipment in the LPN expansion area accesses both the macro base station and the micro base station by using a multiflow technology, communicates with the macro base station by using the carrier A, and communicates with the micro base station by using the carrier B. The schedule weight adjustment method provided in this embodiment is implemented for the user equipment in the LPN expansion area.

As shown in FIG. 2, the schedule weight adjustment method includes:

Step 201: A first base station acquires a first channel quality indicator CQI, which is on a first carrier, of user equipment in an LPN expansion area, and a first transport block size TBS, which is on a second carrier, of the user equipment in the LPN expansion area.

Step 202: The first base station determines, according to the first CQI and the first TBS, whether a service rate obtained from the second base station by the user equipment in the LPN expansion area is greater than a service rate obtained from the first base station, and obtains a determining result.

Step 203: The first base station adjusts a schedule weight of the user equipment in the first base station according to the determining result.

When the cell offset is set on the first carrier (that is, the first carrier is the carrier B), the first base station is a micro base station, and the second base station is a macro base station. When the cell offset is set on the second carrier (that is, the second carrier is the carrier B), the second base station is a micro base station, and the first base station is a macro base station.

For example, the macro base station acquires a CQI, which is on the carrier A, of the user equipment in the LPN expansion area, and a TBS, which is on the carrier B, of the user equipment in the LPN expansion area. The macro base station determines, according to the CQI and the TBS, whether a service rate obtained from the micro base station by the user equipment in the LPN expansion area is greater than a service rate obtained from the macro base station, and obtains a determining result. The macro base station adjusts a schedule weight of the user equipment in the macro

base station according to the determining result. For the user equipment in the LPN expansion area, in the schedule weight adjustment method used by the macro base station, in addition to quality of a radio channel between the user equipment in the LPN expansion area and the macro base station, quality of a service provided by the micro base station to the user equipment in the LPN expansion area is further considered. A schedule weight, in the macro base station, of a user in the LPN expansion area is flexibly adjusted, which can flexibly compensate a user, whose performance is limited, in the LPN expansion area. Therefore, a technical problem in the prior art that after a cell offset is introduced to an HSDPA Het-Net, a link status of an LPN user in an expansion area is poorer than that of the LPN user when the LPN user accesses a macro cell, and limited performance may be caused is resolved, and and the user equipment in the LPN expansion area has a good link status.

For example, the micro base station acquires a CQI, which is on the carrier B, of the user equipment in the LPN expansion area, and a TBS, which is on the carrier A, of the user equipment in the LPN expansion area. The micro base station determines, according to the CQI and the TBS, whether a service rate obtained from the micro base station by the user equipment in the LPN expansion area is greater than a service rate obtained from the macro base station, and obtains a determining result. The micro base station adjusts a schedule weight of the user equipment in the micro base station according to the determining result. For the user equipment in the LPN expansion area, in the schedule weight adjustment method used by the micro base station, in addition to quality of a radio channel between the user equipment in the LPN expansion area and the micro base station, quality of a service provided by the macro base station to the user equipment in the LPN expansion area is further considered. A schedule weight, in the micro base station, of a user in the LPN expansion area is flexibly adjusted, which can flexibly compensate a user, whose performance is limited, in the LPN expansion area. Therefore, a technical problem in the prior art that after a cell offset is introduced to an HSDPA Het-Net, a link status of an LPN user in an expansion area is poorer than that of the LPN user when the LPN user accesses a macro cell, and limited performance may be caused is resolved, and a technical effect of ensuring that the user equipment in the LPN expansion area has a good link status is implemented.

Optionally, in this embodiment, step 203 includes:

if the service rate obtained from the second base station by the user equipment is greater than the service rate obtained from the first base station, decreasing, by the first base station, the schedule weight of the user equipment in the first base station; or

if the service rate obtained from the second base station by the user equipment is not greater than the service rate obtained from the first base station, increasing, by the first base station, the schedule weight of the user equipment in the first base station.

For example, from a side of the macro base station, if a service rate obtained from the micro base station by the user equipment is greater than a service rate obtained from the macro base station (that is, it is determined that the user equipment in the LPN expansion area has good performance, and is not a performance-limited device), the macro base station decreases a schedule weight of the user equipment in the macro base station in the LPN expansion area, thereby reducing a percentage of wireless resources of the macro base station that are occupied by the user equipment, which has relatively good performance, in the LPN expansion area, and improving utilization of wireless resources of the macro base station; or if a service rate obtained from the micro base station by the user equipment is not greater than a service rate obtained from the macro base station (that is, it is determined that performance of the user equipment in the LPN expansion area may be limited), the macro base station increases a schedule weight of the user equipment in the macro base station in the LPN expansion area, thereby compensating the performance of the user equipment in the LPN expansion area.

For example, from a side of the micro base station, if a service rate obtained from the macro base station by the user equipment is greater than a service rate obtained from the micro base station (that is, it is determined that the user equipment in the LPN expansion area has good performance, and is not a performance-limited device), the micro base station decreases a schedule weight of the user equipment in the micro base station in the LPN expansion area, thereby reducing a percentage of wireless resources of the micro base station that are occupied by the user equipment, which has relatively good performance, in the LPN expansion area, and improving utilization of wireless resources of the micro base station; or if a service rate obtained from the micro base station by the user equipment is not greater than a service rate obtained from the macro base station (that is, it is determined that performance of the user equipment in the LPN expansion area may be limited), the micro base station increases a schedule weight of the user equipment in the micro base station in the LPN expansion area, thereby compensating the performance of the user equipment in the LPN expansion area.

Optionally, in this embodiment, when the first base station is a macro base station, and the second base station is a micro base station, the acquiring, by a first base station, a first transport block size TBS, which is on a second carrier, of the user equipment in the LPN expansion area includes:

receiving, by the macro base station, the first TBS, which is sent by the user equipment in the LPN expansion area, of the user equipment in the LPN expansion area on a high speed downlink shared control channel HS-SCCH on the second carrier; and/or

acquiring, by the macro base station, a second CQI, which is on the second carrier, of the user equipment in the LPN expansion area, and acquiring a TBS of the user equipment in the LPN expansion area from the second CQI; and receiving, by the macro base station, a difference TBS, which is sent by the user equipment in the LPN expansion area, of the user equipment that is in the LPN expansion area and that is on the HS-SCCH on the second carrier, where the difference TBS is a difference between the first TBS and the TBS of the user equipment in the LPN expansion area in the second CQI, and determining, by the macro base station, the first TBS according to a difference between the TBS of the user equipment in the LPN expansion area in the second CQI and the TBS.

For example, when the user equipment in the LPN expansion area needs to feed back, to the macro base station, TBS information included in the HS-SCCH channel that is from an LPN, the following two feedback manners may be used: differential feedback and full feedback.

Differential feedback: The user equipment in the LPN expansion area is a user in a soft handover area; therefore, the macro base station may obtained, by means of listening, information about the second CQI that is fed back by the user equipment in the LPN expansion area to the LPN. On the other hand, each time the LPN performs scheduling, the LPN transmits the HS-SCCH , and after demodulating the HS-SCCH that is from the LPN, the user equipment in the LPN expansion area feeds back, to the macro base station, a difference between the TBS information, which is about the user equipment, in the HS-SCCH and TBS information in the second CQI.

Full feedback: After demodulating the HS-SCCH that is from the LPN, the user equipment in the LPN expansion area feeds back, to the macro base station, TBS information that is about the user equipment and that is in information about the HS-SCCH.

Optionally, in this embodiment, as shown in FIG. 3, step 202 includes:

Step 301: The first base station determines a schedule weight adjustment parameter of the user equipment in the LPN expansion area according to the first CQI and the first TBS.

Step 302: When the schedule weight adjustment parameter is less than a first preset parameter, the first base station determines that the service rate obtained from the second base station by the user equipment in the LPN expansion area is not greater than the service rate obtained from the first base station.

Step 303: When the schedule weight adjustment parameter is greater than a second preset parameter, the first base station determines that the service rate obtained from the second base station by the user equipment in the LPN expansion area is greater than the service rate obtained from the first base station, where the second preset parameter is greater than or equal to the first preset parameter.

For example, the macro base station determines a schedule weight adjustment parameter of the user equipment in the LPN expansion area according to a CQI, which is on the carrier A, of the user equipment in the LPN expansion area and a TBS, which is on the carrier B, of the user equipment in the LPN expansion area; when the schedule weight adjustment parameter is less than a first preset parameter, the macro base station determines that a service rate obtained from the micro base station by the user equipment in the LPN expansion area is not greater than a service rate obtained from the macro base station. When the schedule weight adjustment parameter is greater than a second preset parameter, the macro base station determines that a service rate obtained from the micro base station by the user equipment in the LPN expansion area is greater than a service rate obtained from the macro base station, where the second preset parameter is greater than or equal to the first preset parameter.

For example, the micro base station determines a schedule weight adjustment parameter of the user equipment in the LPN expansion area according to a CQI, which is on the carrier B, of the user equipment in the LPN expansion area and a TBS, which is on the carrier A, of the user equipment in the LPN expansion area; when the schedule weight adjustment parameter is less than a first preset parameter, the micro base station determines that a service rate obtained from the micro base station by the user equipment in the LPN expansion area is not greater than a service rate obtained from the macro base station. When the schedule weight adjustment parameter is greater than a second preset parameter, the micro base station determines that a service rate obtained from the macro base station by the user equipment in the LPN expansion area is greater than a service rate obtained from the micro base station, where the second preset parameter is greater than or equal to the first preset parameter.

Optionally, in this embodiment, as shown in FIG. 4, step 301 includes:

Step 401: The first base station determines a reachable rate, which is on the first carrier, of the user equipment in the LPN expansion area based on the first CQI.

Step 402: The first base station determines an average throughput rate, which is on the second carrier, of the user

equipment in the LPN expansion area based on the first TBS.

Step 403: The first base station determines the schedule weight adjustment parameter based on the average throughput rate and the reachable rate.

For example, the macro base station determines a reachable rate, which is on the carrier A, of the user equipment in the LPN expansion area based on a CQI, which is on the carrier A, of the user equipment in the LPN expansion area. The macro base station determines an average throughput rate, which is on the carrier B, of the user equipment in the LPN expansion area according to TBS information that is fed back by the user equipment in the LPN expansion area and that is included in an HS-SCCH channel from the an LPN on the carrier B; and the macro base station determines the schedule weight adjustment parameter based on the average throughput rate and the reachable rate.

For example, the micro base station determines a reachable rate, which is on the carrier B, of the user equipment in the LPN expansion area based on a CQI, which is on the carrier B, of the user equipment in the LPN expansion area; the micro base station may listen on scheduling information of the macro base station for the user equipment, and obtain a TBS, which is on the carrier A, of the user equipment in the LPN expansion area, so as to determine an average throughput rate, which is on the carrier A, of the user equipment in the LPN expansion area; and the micro base station determines the schedule weight adjustment parameter based on the average throughput rate and the reachable rate.

Optionally, in this embodiment, the first base station determines the schedule weight adjustment parameter based on the following formula:

$$swap = \tilde{r}_{k,2} \ / \ \overline{c}_{k,1},$$

where

swap is the schedule weight adjustment parameter, $\overline{c}_{k,1}$ is the reachable rate, which is on the first carrier, of the user equipment in the LPN expansion area, and $\tilde{r}_{k,2}$ is the average throughput rate, which is on the second carrier, of the user equipment in the LPN expansion area.

A greater schedule weight adjustment parameter indicates a greater average rate obtained from the second base station by the user equipment in the LPN expansion area, and a lower reachable rate of transmission from the first base station to the user equipment. A greater average rate obtained from the second base station by the user equipment indicates a smaller possibility that system performance of the user equipment is limited, and a lower reachable rate of transmission from the first base station to the user equipment indicates lower utilization of wireless resources when the first base station schedules the user equipment. Therefore, when the schedule weight adjustment parameter is less than a particular value (that is, the first preset parameter), the schedule weight of the user equipment in the first base station is increased; when the schedule weight adjustment parameter is greater than a particular value (that is, the second preset parameter), the schedule weight of the user equipment in the first base station is decreased.

For example, the macro base station determines the schedule weight adjustment parameter based on the following formula:

$$swap = \tilde{r}_{k,2} \ / \ \overline{c}_{k,1},$$

where

swap is the schedule weight adjustment parameter, $\overline{c}_{k,1}$ is a reachable rate, which is on the carrier A, of the user equipment in the LPN expansion area, and $\tilde{r}_{k,2}$ is an average throughput rate, which is on the carrier B, of the user equipment in the LPN expansion area.

For example, the micro base station determines the schedule weight adjustment parameter based on the following formula:

$$swap = \tilde{r}_{k,2} \ / \ \overline{c}_{k,1} \quad (1),$$

where

swap is the schedule weight adjustment parameter, $\overline{c}_{k,1}$ is a reachable rate, which is on the carrier B, of the user equipment in the LPN expansion area, and $\tilde{r}_{k,2}$ is an average throughput rate, which is on the carrier A, of the user equipment in the LPN expansion area.

Optionally, in this embodiment, the first base station determines the schedule weight adjustment parameter according to the following formula:

$$\text{swap} = \Delta p_k = \frac{\frac{1}{L} - p_k}{\frac{1}{L}} = \left(\frac{1}{L}\sum_k \frac{\tilde{r}_{k,2}}{\bar{c}_{k,1}}\right)^{-1} \cdot L \cdot \frac{\tilde{r}_{k,2}}{\bar{c}_{k,1}} - 1 \quad (2),$$

where

swap is the schedule weight adjustment parameter, $\overline{c}_{k,1}$ is the reachable rate, which is on the first carrier, of the user equipment in the LPN expansion area, $\tilde{r}_{k,2}$ is the average throughput rate, which is on the second carrier, of the user equipment in the LPN expansion area, $p_k$ is a probability of scheduling the user equipment in the LPN expansion area by the first base station, and L is a total quantity of user equipments in a set *U* of user equipments in the LPN expansion area.

For example, the macro base station determines the schedule weight adjustment parameter according to the following formula:

$$\text{swap} = \frac{\frac{1}{L} - p_k}{\frac{1}{L}} = \left(\frac{1}{L}\sum_k \frac{\tilde{r}_{k,2}}{\bar{c}_{k,1}}\right)^{-1} \cdot L \cdot \frac{\tilde{r}_{k,2}}{\bar{c}_{k,1}} - 1,$$

where

swap is the schedule weight adjustment parameter, $\overline{c}_{k,1}$ is a reachable rate, which is on the carrier A, of the user equipment in the LPN expansion area, $\tilde{r}_{k,2}$ is an average throughput rate, which is on the carrier B, of the user equipment in the LPN expansion area, $p_k$ is a probability of scheduling user equipment k in the LPN expansion area by the macro base station, and L is a total quantity of user equipments in a set *U* of user equipments in the LPN expansion area, where a value range of k is positive integers in [1, L].

For example, the micro base station determines the schedule weight adjustment parameter according to the following formula:

$$\text{swap} = \frac{\frac{1}{L} - p_k}{\frac{1}{L}} = \left(\frac{1}{L}\sum_k \frac{\tilde{r}_{k,2}}{\bar{c}_{k,1}}\right)^{-1} \cdot L \cdot \frac{\tilde{r}_{k,2}}{\bar{c}_{k,1}} - 1,$$

where

swap is the schedule weight adjustment parameter, $\overline{c}_{k,1}$ is a reachable rate, which is on the carrier B, of the user equipment in the LPN expansion area, $\tilde{r}_{k,2}$ is an average throughput rate, which is on the carrier A, of the user equipment in the LPN expansion area, $p_k$ is a probability of scheduling user equipment k in the LPN expansion area by the micro base station, and L is a total quantity of user equipments in a set *U* of user equipments in the LPN expansion area, where a value range of k is positive integers in [1, L].

Optionally, in this embodiment, the first base station determines, based on the following formula, the probability of scheduling the user equipment in the LPN expansion area:

$$\begin{cases} p_k = \left[\frac{1}{\lambda} - \frac{\tilde{r}_{k,2}}{\bar{c}_{k,1}}\right]^+, & k \in U \\ \sum_{k=1}^{L} p_k = 1 \end{cases},$$

where
$\overline{c}_{k,1}$ is the reachable rate, which is on the first carrier, of the user equipment in the LPN expansion area, $\tilde{r}_{k,2}$ is the average throughput rate, which is on the second carrier, of the user equipment in the LPN expansion area, $p_k$ is the probability of scheduling the user equipment in the LPN expansion area by the first base station, and L is a total quantity of user equipments in a set $U$ of user equipments in the LPN expansion area.

For example, the macro base station determines, based on the following formula, the probability of scheduling the user equipment in the LPN expansion area:

$$\begin{cases} p_k = \left[\dfrac{1}{\lambda} - \dfrac{\tilde{r}_{k,2}}{\overline{c}_{k,1}}\right]^+, & k \in U \\ \sum_{k=1}^{L} p_k = 1 \end{cases},$$

where
$\overline{c}_{k,1}$ is a reachable rate, which is on the carrier A, of the user equipment in the LPN expansion area, $\tilde{r}_{k,2}$ is an average throughput rate, which is on the carrier B, of the user equipment in the LPN expansion area, $p_k$ is the probability of scheduling user equipment k in the LPN expansion area by the macro base station, and L is a total quantity of user equipments in a set $U$ of user equipments in the LPN expansion area, where a value range of k is positive integers in [1, L].

For example, the micro base station determines, based on the following formula, the probability of scheduling the user equipment in the LPN expansion area:

$$\begin{cases} p_k = \left[\dfrac{1}{\lambda} - \dfrac{\tilde{r}_{k,2}}{\overline{c}_{k,1}}\right]^+, & k \in U \\ \sum_{k=1}^{L} p_k = 1 \end{cases},$$

where
$\overline{c}_{k,1}$ is a reachable rate, which is on the carrier B, of the user equipment in the LPN expansion area, $\tilde{r}_{k,2}$ is an average throughput rate, which is on the carrier A, of the user equipment in the LPN expansion area, $p_k$ is the probability of scheduling user equipment k in the LPN expansion area by the micro base station, and L is a total quantity of user equipments in a set $U$ of user equipments in the LPN expansion area, where a value range of k is positive integers in [1, L].

Optionally, in this embodiment, as shown in FIG. 5, step 401 includes:

Step 501: The first base station obtains a corresponding second TBS according to the first CQI.
Step 502: The first base station determines an average second TBS, which is on the first carrier, of the user equipment in the LPN expansion area based on the second TBS.
Step 503: The first base station acquires a unit time length of a subframe.
Step 504: The first base station determines the reachable rate based on the average second TBS and the unit time length of the subframe.

For example, step 401 includes:

obtaining, by the macro base station, a corresponding TBS according to a CQI, which is on the carrier A, of the user equipment in the LPN expansion area; determining, by the macro base station based on the second TBS, an average TBS, which is on the carrier A, of the user equipment in the LPN expansion area; acquiring, by the macro base station, the unit time length of the subframe; and determining, by the macro base station, a reachable rate, which is on the carrier A, of the user equipment in the LPN expansion area based on the average TBS and the unit time length of the subframe.

For example, step 401 includes:

obtaining, by the micro base station, a corresponding TBS according to a CQI, which is on the carrier B, of the user equipment in the LPN expansion area; determining, by the micro base station based on the TBS, an average TBS,

which is on the carrier B, of the user equipment in the LPN expansion area; acquiring, by the micro base station, the unit time length of the subframe; and determining, by the micro base station, a reachable rate, which is on the carrier B, of the user equipment in the LPN expansion area based on the average TBS and the unit time length of the subframe.

Optionally, in this embodiment, the first base station determines the reachable rate based on the following formula:

$$\overline{c}_{k,1} = \frac{\overline{x}_{k,1}}{T_{SF}},$$

where
$\overline{c_{k,1}}$ is the reachable rate, which is on the first carrier, of the user equipment in the LPN expansion area, $x_{k,1}$ is the average second TBS, which is on the first carrier, of the user equipment in the LPN expansion area, and $T_{SF}$ is the unit time length of the subframe.

For example, the macro base station determines a reachable rate, which is on the carrier A, of the user equipment in the LPN expansion area based on the following formula:

$$\overline{c}_{k,1} = \frac{\overline{x}_{k,1}}{T_{SF}},$$

where
$\overline{c_{k,1}}$ is the reachable rate, which is on the carrier A, of the user equipment in the LPN expansion area, $x_{k,1}$ is an average TBS, which is on the carrier A, of the user equipment in the LPN expansion area, and $T_{SF}$ is the unit time length of the subframe.

For example, the micro base station determines a reachable rate, which is on the carrier B, of the user equipment in the LPN expansion area based on the following formula:

$$\overline{c}_{k,1} = \frac{\overline{x}_{k,1}}{T_{SF}},$$

where
$\overline{c_{k,1}}$ is the reachable rate, which is on the carrier B, of the user equipment in the LPN expansion area, $x_{k,1}$ is an average TBS, which is on the carrier A, of the user equipment in the LPN expansion area, and $T_{SF}$ is the unit time length of the subframe.

Optionally, in this embodiment, the first base station decreases the schedule weight of the user equipment in the first base station in the LPN expansion area according to the following formula:

$$w_k = \max(w_k \cdot \beta,\ 1), \quad 0 < \beta < 1;$$

or

$$w_k = w_k \cdot \beta, \quad 0 < \beta < 1,$$

where
$w_k$ is the schedule weight of the user equipment in the LPN expansion area.

In a specific implementation process, when the first base station adjusts the schedule weight of the user

equipment in the LPN expansion area by using the method in formula (1), the first base station should first determine an upper bound threshold $T_U$ and a lower bound threshold $T_L$, and initialize schedule weights of all user equipments in the LPN expansion area to $w_k$=1. When the first base station adjusts the schedule weight of the user equipment in the LPN expansion area by using the method in formula (2), the first base station should first initialize schedule weights of all user equipments in the LPN expansion area to $w_k$=1.

For example, when the macro base station determines the schedule weight adjustment parameter by using the method in formula (1), if swap= $\tilde{r}_{k,2}$ / $\overline{c_{k,1}}$ > $T_U$, the macro base station decreases a schedule weight of the user equipment in the macro base station in the LPN expansion area according to the following formula:

$$w_k = w_k \cdot \beta, \quad 0 < \beta < 1,$$

where

$w_k$ is a schedule weight of user equipment k in the LPN expansion area, and $T_U$ is the second preset parameter.

For example, when the micro base station determines the schedule weight adjustment parameter by using the method in formula (1), if swap= $\tilde{r}_{k,2}$ / $\overline{c_{k,1}}$ > $T_U$, the micro base station decreases a schedule weight of the user equipment in the micro base station in the LPN expansion area according to the following formula:

$$w_k = \max(w_k \cdot \beta,\ 1), \quad 0 < \beta < 1,$$

where

$w_k$ is a schedule weight of user equipment k in the LPN expansion area, and $T_U$ is the second preset parameter.

For example, when the macro base station determines the schedule weight adjustment parameter by using the method in formula (2), if swap= $\Delta p_k$ > 0, the macro base station decreases a schedule weight of the user equipment in the macro base station in the LPN expansion area according to the following formula:

$$w_k = w_k \cdot \beta, \quad 0 < \beta < 1,$$

where

$w_k$ is a schedule weight of user equipment k in the LPN expansion area, and 0 is the second preset parameter.

For example, when the micro base station determines the schedule weight adjustment parameter by using the method in formula (2), if swap= $\Delta p_k$ > 0, the micro base station decreases a schedule weight of the user equipment in the micro base station in the LPN expansion area according to the following formula:

$$w_k = \max(w_k \cdot \beta,\ 1), \quad 0 < \beta < 1,$$

where

$w_k$ is a schedule weight of user equipment k in the LPN expansion area, and 0 is the second preset parameter.

Optionally, in this embodiment, the first base station increases the schedule weight of the user equipment in the first base station in the LPN expansion area according to the following formula:

$$w_k = w_k / \beta, \quad 0 < \beta < 1,$$

where

$w_k$ is the schedule weight of the user equipment in the LPN expansion area.

For example, when the macro base station determines the schedule weight adjustment parameter by using the method in formula (1), if swap=$\tilde{r}_{k,2}$ / $\overline{c_{k,1}}$ < $T_L$, the macro base station increases a schedule weight of the user equipment in the macro base station in the LPN expansion area according to the following formula:

$$w_k = w_k / \beta, \quad 0 < \beta < 1,$$

where

$w_k$ is a schedule weight of user equipment k in the LPN expansion area, and $T_L$ is the second preset parameter.

For example, when the micro base station determines the schedule weight adjustment parameter by using the method in formula (1), if swap=$\tilde{r}_{k,2} / \overline{c_{k,1}} < T_L$, the micro base station increases a schedule weight of the user equipment in the micro base station in the LPN expansion area according to the following formula:

$$w_k = w_k / \beta, \quad 0 < \beta < 1,$$

where

$w_k$ is a schedule weight of user equipment k in the LPN expansion area, and $T_L$ is the second preset parameter.

For example, when the macro base station determines the schedule weight adjustment parameter by using the method in formula (2), if swap= $\Delta p_k < 0$, the macro base station increases a schedule weight of the user equipment in the macro base station in the LPN expansion area according to the following formula:

$$w_k = w_k / \beta, \quad 0 < \beta < 1,$$

where

$w_k$ is a schedule weight of user equipment k in the LPN expansion area, and 0 is the second preset parameter.

For example, when the micro base station determines the schedule weight adjustment parameter by using the method in formula (2), if swap= $\Delta p_k < 0$ , the micro base station increases a schedule weight of the user equipment in the micro base station in the LPN expansion area according to the following formula:

$$w_k = w_k / \beta, \quad 0 < \beta < 1,$$

where

$w_k$ is a schedule weight of user equipment k in the LPN expansion area, and 0 is the second preset parameter.

After the macro base station and/or the micro base station adjusts the schedule weight of the user equipment in the LPN expansion area, the macro base station and/or the micro base station can send data to the user equipment in the LPN expansion area according to an adjusted schedule weight.

Performance test data of the solutions of the present invention in a DFDC (Dual Frequency Dual Cell, dual frequency dual cell) mode is given below. As a comparison, in a reference solution, a schedule weight of the user equipment on each carrier is not adjusted.

| | **Average throughput of user equipments** | **Throughput of 50% of user equipments** | **Throughput of 5% of user equipments** |
|---|---|---|---|
| Reference solution | 100% | 100% | 100% |
| Formula (1) | 100.87% | 104.72% | 115.09% |
| Formula (2) | 99.64% | 105.41% | 121.13% |

This table gives a comparison on average throughput of user equipments, throughput of the poorest 50% of the user equipments, and throughput of the poorest 5% of the user equipments among different solutions. It can be seen from the table that, according to the method of formula (1), on the premise that it is ensured that the average throughput

of user equipments is not decreased, the throughput of the poorest 5% of the user equipments is increased; according to the method of formula (2), the average throughput of user equipments is slightly decreased, and the throughput of the poorest 5% of the user equipments is dramatically increased. In the method of formula (2), because low-rate user equipment is overcompensated, the average throughput of user equipments is decreased, and in the method of formula (1), compensation on the low-rate user equipment may be conveniently adjusted by setting two thresholds, so as to improve flexibility of the solution. On the basis that an average throughput rate of user equipments remains almost unchanged, the schedule weight adjustment method can obviously improve throughput of edge user equipment.

**Embodiment 2**

Based on a same inventive concept, as shown in FIG. 6, this embodiment provides a first base station 600, applied to a High Speed Downlink Packet Access heterogeneous network HSDPA Het-Net system, including:

an acquiring unit 601, configured to acquire a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier;
a judging unit 602, configured to receive the first CQI and the first TBS from the acquiring unit 601, determine, according to the first CQI and the first TBS, whether a service rate obtained from the second base station by the user equipment is greater than a service rate obtained from the first base station, and obtain a determining result; and
an adjustment unit 603, configured to receive the determining result from the judging unit 602, and adjust a schedule weight of the user equipment in the first base station according to the determining result.

Optionally, in this embodiment, the adjustment unit 603 includes:

a decreasing module, configured to: if the service rate obtained from the second base station by the user equipment is greater than the service rate obtained from the first base station, decrease the schedule weight of the user equipment in the first base station; and
an increasing module, configured to: if the service rate obtained from the second base station by the user equipment is not greater than the service rate obtained from the first base station, increase the schedule weight of the user equipment in the first base station.

Optionally, in this embodiment, when the cell offset is set on the first carrier, the first base station is a micro base station, and the second base station is a macro base station. When the cell offset is set on the second carrier, the second base station is a micro base station, and the first base station is a macro base station.
Optionally, in this embodiment, the judging unit 602 includes:

a determining module, configured to determine a schedule weight adjustment parameter of the user equipment according to the first CQI and the first TBS; and
a judging module, configured to determine, according to the schedule weight adjustment parameter, whether the service rate obtained from the second base station by the user equipment is greater than the service rate obtained from the first base station.

Optionally, in this embodiment, the judging module is further configured to:

when the schedule weight adjustment parameter is less than a first preset parameter, determine that the service rate obtained from the second base station by the user equipment in the LPN expansion area is not greater than the service rate obtained from the first base station; and when the schedule weight adjustment parameter is greater than a second preset parameter, determine that the service rate obtained from the second base station by the user equipment in the LPN expansion area is greater than the service rate obtained from the first base station, where the second preset parameter is greater than or equal to the first preset parameter.

Optionally, in this embodiment, the determining module is further configured to:

determine a reachable rate, which is on the first carrier, of the user equipment based on the first CQI; determine an average throughput rate, which is on the second carrier, of the user equipment based on the first TBS; and determine the schedule weight adjustment parameter based on the average throughput rate and the reachable rate.

Optionally, in this embodiment, the determining module determines the schedule weight adjustment parameter based on the following formula:

$$\mathrm{swap}=\tilde{r}_{k,2}\ /\ \overline{c}_{k,1},$$

where
swap is the schedule weight adjustment parameter, $\overline{c_{k,1}}$ is the reachable rate, which is on the first carrier, of the user equipment, and $\tilde{r}_{k,2}$ is the average throughput rate, which is on the second carrier, of the user equipment.

Optionally, in this embodiment, the determining module determines the schedule weight adjustment parameter according to the following formula:

$$\mathrm{swap}=\frac{\frac{1}{L}-p_k}{\frac{1}{L}}=\left(\frac{1}{L}\sum_k\frac{\tilde{r}_{k,2}}{\overline{c}_{k,1}}\right)^{-1}\cdot L\cdot\frac{\tilde{r}_{k,2}}{\overline{c}_{k,1}}-1,$$

where
swap is the schedule weight adjustment parameter, $\overline{c_{k,1}}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set $U$ that includes the user equipment.

Optionally, in this embodiment, the determining module determines, based on the following formula, the probability of scheduling the user equipment by the first base station:

$$\begin{cases} p_k=\left[\frac{1}{\lambda}-\frac{\tilde{r}_{k,2}}{\overline{c}_{k,1}}\right]^{+}, & k\in U \\ \sum_{k=1}^{L}p_k=1 \end{cases},$$

where
$\overline{c}_{k,1}$ is the reachable rate, which is on the first carrier, of the user equipment, $\tilde{r}_{k,2}$ is the average throughput rate, which is on the second carrier, of the user equipment, $p_k$ is the probability of scheduling the user equipment by the first base station, and L is a total quantity of user equipments in a set $U$ that includes the user equipment.

Optionally, in this embodiment, the determining module is further configured to:

obtain, according to the first CQI, a second TBS that corresponds to the first CQI; determine an average second TBS, which is on the first carrier, of the user equipment in the LPN expansion area based on the second TBS; acquire a unit time length of a subframe; and determine the reachable rate based on the average second TBS and the unit time length of the subframe.

Optionally, in this embodiment, the determining module determines the reachable rate based on the following formula:

$$\overline{c}_{k,1}=\frac{\overline{x}_{k,1}}{T_{SF}},$$

where

$\overline{c_{k,1}}$ is the reachable rate, which is on the first carrier, of the user equipment, $\overline{x_{k,1}}$ is the average second TBS, which is on the first carrier, of the user equipment, and $T_{SF}$ is the unit time length of the subframe.

Optionally, in this embodiment, the decreasing module decreases the schedule weight of the user equipment in the first base station in the LPN expansion area according to the following formula:

$$w_k = \max(w_k \cdot \beta,\ 1),\quad 0 < \beta < 1;$$

or

$$w_k = w_k \cdot \beta,\quad 0 < \beta < 1,$$

where

$w_k$ is the schedule weight of the user equipment in the LPN expansion area.

Optionally, in this embodiment, the increasing module increases the schedule weight of the user equipment in the first base station in the LPN expansion area according to the following formula:

$$w_k = w_k / \beta,\quad 0 < \beta < 1,$$

where

$w_k$ is the schedule weight of the user equipment in the LPN expansion area.

Optionally, in this embodiment, when the first base station is a macro base station, and the second base station is a micro base station, the acquiring unit 601 includes:

a first acquiring module, configured to receive the first TBS, which is sent by the user equipment, of the user equipment on a high speed downlink shared control channel HS-SCCH on the second carrier; and/or
a second acquiring module, configured to acquire a second CQI, which is on the second carrier, of the user equipment, and acquire a TBS of the user equipment from the second CQI; and receive a difference TBS, which is sent by the user equipment, of the user equipment on the HS-SCCH on the second carrier, where the difference TBS is a difference between the first TBS and the TBS of the user equipment in the second CQI, and determine the first TBS according to a difference between the TBS of the user equipment in the second CQI and the TBS.

**Embodiment 3**

Based on a same inventive concept, as shown in FIG. 7, this embodiment provides a first base station 700, applied to a High Speed Downlink Packet Access heterogeneous network HSDPA Het-Net system, including:

a transceiver 701, configured to acquire a first channel quality indicator CQI, which is on a first carrier, of user equipment in a low power node LPN expansion area, and a first transport block size TBS, which is on a second carrier, of the user equipment, where the first carrier is used by the user equipment to communicate with the first base station, the second carrier is used by the user equipment to communicate with a second base station, and a cell offset is set on the first carrier or the second carrier;
a memory 703, indirectly (or directly) connected to the transceiver 702, configured to store the first CQI and the first TBS; and
at least one processor 702, connected to the transceiver 701 and/or the memory 703, configured to determine, according to the first CQI and the first TBS, whether a service rate obtained from the second base station by the user equipment is greater than a service rate obtained from the first base station, and obtain a determining result; and adjust a schedule weight of the user equipment in the first base station according to the determining result.

Optionally, in this embodiment, the processor 702 is further configured to:

if the service rate obtained from the second base station by the user equipment is greater than the service rate

obtained from the first base station, decrease the schedule weight of the user equipment in the first base station; or if the service rate obtained from the second base station by the user equipment is not greater than the service rate obtained from the first base station, increase the schedule weight of the user equipment in the first base station.

Optionally, in this embodiment, when the cell offset is set on the first carrier, the first base station is a micro base station, and the second base station is a macro base station. When the cell offset is set on the second carrier, the second base station is a micro base station, and the first base station is a macro base station.

Optionally, in this embodiment, the processor 702 is further configured to:

determine a schedule weight adjustment parameter of the user equipment according to the first CQI and the first TBS; and determine, according to the schedule weight adjustment parameter, whether the service rate obtained from the second base station by the user equipment is greater than the service rate obtained from the first base station.

Optionally, in this embodiment, the processor 702 is further configured to:

when the schedule weight adjustment parameter is less than a first preset parameter, determine that the service rate obtained from the second base station by the user equipment in the LPN expansion area is not greater than the service rate obtained from the first base station; and when the schedule weight adjustment parameter is greater than a second preset parameter, determine that the service rate obtained from the second base station by the user equipment in the LPN expansion area is greater than the service rate obtained from the first base station, where the second preset parameter is greater than or equal to the first preset parameter.

Optionally, in this embodiment, the processor 702 is further configured to:

determine a reachable rate, which is on the first carrier, of the user equipment based on the first CQI; determine an average throughput rate, which is on the second carrier, of the user equipment based on the first TBS; and determine the schedule weight adjustment parameter based on the average throughput rate and the reachable rate.

Optionally, in this embodiment, the processor 702 determines the schedule weight adjustment parameter based on the following formula:

$$\mathrm{swap}=\tilde{r}_{k,2}\ /\ \overline{c}_{k,1},$$

where
swap is the schedule weight adjustment parameter, $\overline{c}_{k,1}$ is the reachable rate, which is on the first carrier, of the user equipment, and $\tilde{r}_{k,2}$ is the average throughput rate, which is on the second carrier, of the user equipment.

Optionally, in this embodiment, the processor 702 determines the schedule weight adjustment parameter according to the following formula:

$$\mathrm{swap}=\frac{\frac{1}{L}-p_k}{\frac{1}{L}}=\left(\frac{1}{L}\sum_k\frac{\tilde{r}_{k,2}}{\overline{c}_{k,1}}\right)^{-1}\cdot L\cdot\frac{\tilde{r}_{k,2}}{\overline{c}_{k,1}}-1,$$

where
swap is the schedule weight adjustment parameter, $\overline{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set *U* that includes the user equipment.

Optionally, in this embodiment, the processor 702 determines, based on the following formula, the probability of scheduling the user equipment by the first base station:

$$\begin{cases} p_k = \left[ \dfrac{1}{\lambda} - \dfrac{\tilde{r}_{k,2}}{\overline{c}_{k,1}} \right]^+, & k \in U \\ \sum_{k=1}^{L} p_k = 1 \end{cases}$$

,

where
$\overline{c}_{k,1}$ is the reachable rate, which is on the first carrier, of the user equipment, $\tilde{r}_{k,2}$ is the average throughput rate, which is on the second carrier, of the user equipment, $p_k$ is the probability of scheduling the user equipment by the first base station, and L is a total quantity of user equipments in a set $U$ that includes the user equipment.

Optionally, in this embodiment, the processor 702 is further configured to:

obtain, according to the first CQI, a second TBS that corresponds to the first CQI; determine an average second TBS, which is on the first carrier, of the user equipment in the LPN expansion area based on the second TBS; acquire a unit time length of a subframe; and determine the reachable rate based on the average second TBS and the unit time length of the subframe.

Optionally, in this embodiment, the processor 702 determines the reachable rate based on the following formula:

$$\overline{c}_{k,1} = \frac{\overline{x}_{k,1}}{T_{SF}},$$

where
$\overline{c}_{k,1}$ is the reachable rate, which is on the first carrier, of the user equipment, $\overline{x}_{k,1}$ is the average second TBS, which is on the first carrier, of the user equipment, and $T_{SF}$ is the unit time length of the subframe.

Optionally, in this embodiment, the processor 702 decreases the schedule weight of the user equipment in the first base station in the LPN expansion area according to the following formula:

$$w_k = \max(w_k \cdot \beta,\ 1), \quad 0 < \beta < 1;$$

; or

$$w_k = w_k \cdot \beta, \quad 0 < \beta < 1,$$

where
$w_k$ is the schedule weight of the user equipment in the LPN expansion area.

Optionally, in this embodiment, the processor 702 increases the schedule weight of the user equipment in the first base station in the LPN expansion area according to the following formula:

$$w_k = w_k / \beta, \quad 0 < \beta < 1,$$

where
$w_k$ is the schedule weight of the user equipment in the LPN expansion area.

Optionally, in this embodiment, when the first base station is a macro base station, and the second base station is a micro base station, the processor 702 is further configured to:

receive the first TBS, which is sent by the user equipment, of the user equipment on a high speed downlink shared control channel HS-SCCH on the second carrier; and/or

acquire a second CQI, which is on the second carrier, of the user equipment by using the transceiver, and acquire a TBS of the user equipment from the second CQI; and receive a difference TBS, which is sent by the user equipment, of the user equipment on the HS-SCCH on the second carrier by using the transceiver, where the difference TBS is a difference between the first TBS and the TBS of the user equipment in the second CQI, and determine the first TBS according to a difference between the TBS of the user equipment in the second CQI and the TBS.

Although some preferred embodiments of the present invention have been described, persons skilled in the art can make changes and modifications to these embodiments once they learn the basic inventive concept. Therefore, the following claims are intended to be construed as to cover the preferred embodiments and all changes and modifications falling within the scope of the present invention.

Obviously, persons skilled in the art can make various modifications and variations to the present invention without departing from the spirit and scope of the present invention. The present invention is intended to cover these modifications and variations provided that they fall within the scope of protection defined by the following claims and their equivalent technologies.

## Claims

1. A schedule weight adjustment method, applied to a High Speed Downlink Packet Access heterogeneous network HSDPAHet-Net system, wherein the method comprises:

    acquiring, by a first base station, a first channel quality indicator CQI, which is on a first carrier, of user equipment in a low power node LPN expansion area, and a first transport block size TBS, which is on a second carrier, of the user equipment, wherein the first carrier is used by the user equipment to communicate with the first base station, the second carrier is used by the user equipment to communicate with a second base station, and a cell offset is set on the first carrier or the second carrier;

    determining, by the first base station according to the first CQI and the first TBS, whether a service rate obtained from the second base station by the user equipment is greater than a service rate obtained from the first base station, and obtaining a determining result; and

    adjusting, by the first base station, a schedule weight of the user equipment in the first base station according to the determining result.

2. The method according to claim 1, wherein the adjusting, by the first base station, a schedule weight of the user equipment in the first base station according to the determining result comprises:

    if the service rate obtained from the second base station by the user equipment is greater than the service rate obtained from the first base station, decreasing, by the first base station, the schedule weight of the user equipment in the first base station; or

    if the service rate obtained from the second base station by the user equipment is not greater than the service rate obtained from the first base station, increasing, by the first base station, the schedule weight of the user equipment in the first base station.

3. The method according to either of claims 1 and 2, wherein when the cell offset is set on the first carrier, the first base station is a micro base station, and the second base station is a macro base station; and
when the cell offset is set on the second carrier, the second base station is a micro base station, and the first base station is a macro base station.

4. The method according to any one of claims 1 to 3, wherein the determining, by the first base station according to the first CQI and the first TBS, whether a service rate obtained from the second base station by the user equipment is greater than a service rate obtained from the first base station comprises:

    determining, by the first base station, a schedule weight adjustment parameter of the user equipment according to the first CQI and the first TBS; and

    determining, by the first base station according to the schedule weight adjustment parameter, whether the service rate obtained from the second base station by the user equipment is greater than the service rate obtained from the first base station.

5. The method according to claim 4, wherein the determining, by the first base station according to the schedule weight adjustment parameter, whether the service rate obtained from the second base station by the user equipment is greater than the service rate obtained from the first base station comprises:

when the schedule weight adjustment parameter is less than a first preset parameter, determining, by the first base station, that the service rate obtained from the second base station by the user equipment in the LPN expansion area is not greater than the service rate obtained from the first base station; or
when the schedule weight adjustment parameter is greater than a second preset parameter, determining, by the first base station, that the service rate obtained from the second base station by the user equipment in the LPN expansion area is greater than the service rate obtained from the first base station, wherein the second preset parameter is greater than or equal to the first preset parameter.

6. The method according to either of claims 4 and 5, wherein the determining, by the first base station, a schedule weight adjustment parameter of the user equipment in the LPN expansion area according to the first CQI and the first TBS comprises:

determining, by the first base station based on the first CQI, a reachable rate, which is on the first carrier, of the user equipment;
determining, by the first base station based on the first TBS, an average throughput rate, which is on the second carrier, of the user equipment; and
determining, by the first base station, the schedule weight adjustment parameter based on the average throughput rate and the reachable rate.

7. The method according to claim 6, wherein the first base station determines the schedule weight adjustment parameter based on the following formula:

$$\text{swap} = \tilde{r}_{k,2} \; / \; \overline{c}_{k,1},$$

wherein
swap is the schedule weight adjustment parameter, $\overline{c}_{k,1}$ is the reachable rate, which is on the first carrier, of the user equipment, and $\tilde{r}_{k,2}$ is the average throughput rate, which is on the second carrier, of the user equipment.

8. The method according to claim 6, wherein the first base station determines the schedule weight adjustment parameter according to the following formula:

$$\text{swap} = \frac{\frac{1}{L} - p_k}{\frac{1}{L}} = \left(\frac{1}{L}\sum_k \frac{\tilde{r}_{k,2}}{\overline{c}_{k,1}}\right)^{-1} \cdot L \cdot \frac{\tilde{r}_{k,2}}{\overline{c}_{k,1}} - 1,$$

wherein
swap is the schedule weight adjustment parameter, $\overline{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set $U$ that comprises the user equipment.

9. The method according to claim 8, wherein the first base station determines, based on the following formula, the probability of scheduling the user equipment by the first base station:

$$\begin{cases} p_k = \left[ \dfrac{1}{\lambda} - \dfrac{\tilde{r}_{k,2}}{\overline{c}_{k,1}} \right]^+, & k \in U \\ \sum_{k=1}^{L} p_k = 1 \end{cases},$$

wherein

$\overline{c}_{k,1}$ is the reachable rate, which is on the first carrier, of the user equipments, $\tilde{r}_{k,2}$ is the average throughput rate, which is on the second carrier, of the user equipment, $p_k$ is the probability of scheduling the user equipment by the first base station, and L is a total quantity of user equipments in a set $U$ that comprises the user equipment.

**10.** The method according to any one of claims 6 to 9, wherein the determining, by the first base station based on the first CQI, a reachable rate, which is on the first carrier, of the user equipment in the LPN expansion area comprises:

obtaining, by the first base station according to the first CQI, a second TBS that corresponds to the first CQI;
determining, by the first base station based on the second TBS, an average second TBS, which is on the first carrier, of the user equipment in the LPN expansion area;
acquiring, by the first base station, a unit time length of a subframe; and
determining, by the first base station, the reachable rate based on the average second TBS and the unit time length of the subframe.

**11.** The method according to claim 10, wherein the first base station determines the reachable rate based on the following formula:

$$\overline{c}_{k,1} = \frac{\overline{x}_{k,1}}{T_{SF}},$$

wherein

$\overline{c}_{k,1}$ is the reachable rate, which is on the first carrier, of the user equipment, $\overline{x}_{k,1}$ is the average second TBS, which is on the first carrier, of the user equipment, and $T_{SF}$ is the unit time length of the subframe.

**12.** The method according to any one of claims 2 to 11, wherein the first base station decreases, according to the following formula, the schedule weight of the user equipment in the first base station in the LPN expansion area:

$$w_k = \max(w_k \cdot \beta,\ 1), \quad 0 < \beta < 1;$$

or

$$w_k = w_k \cdot \beta, \quad 0 < \beta < 1,$$

wherein

$w_k$ is the schedule weight of the user equipment in the LPN expansion area.

**13.** The method according to any one of claims 2 to 11, wherein the first base station increases the schedule weight of the user equipment in the first base station in the LPN expansion area according to the following formula:

$$w_k = w_k / \beta, \quad 0 < \beta < 1,$$

wherein

$w_k$ is the schedule weight of the user equipment in the LPN expansion area.

**14.** The method according to any one of claims 1 to 13, wherein when the first base station is a macro base station, and the second base station is a micro base station, the acquiring, by a first base station, a first transport block size TBS, which is on a second carrier, of the user equipment in the LPN expansion area comprises:

receiving, by the macro base station, the first TBS, which is sent by the user equipment, of the user equipment on a high speed downlink shared control channel HS-SCCH on the second carrier; and/or
acquiring, by the macro base station, a second CQI, which is on the second carrier, of the user equipment, and acquiring a TBS of the user equipment from the second CQI; and receiving, by the macro base station, a difference TBS, which is sent by the user equipment, of the user equipment on the HS-SCCH on the second carrier, wherein the difference TBS is a difference between the first TBS and the TBS of the user equipment in the second CQI, and determining, by the macro base station, the first TBS according to a difference between the TBS of the user equipment in the second CQI and the TBS.

**15.** A first base station, applied to a High Speed Downlink Packet Access heterogeneous network HSDPAHet-Net system, comprising:

an acquiring unit, configured to acquire a first channel quality indicator CQI, which is on a first carrier, of user equipment in a low power node LPN expansion area, and a first transport block size TBS, which is on a second carrier, of the user equipment, wherein the first carrier is used by the user equipment to communicate with the first base station, the second carrier is used by the user equipment to communicate with a second base station, and a cell offset is set on the first carrier or the second carrier;
a judging unit, configured to receive the first CQI and the first TBS from the acquiring unit, determine, according to the first CQI and the first TBS, whether a service rate obtained from the second base station by the user equipment is greater than a service rate obtained from the first base station, and obtain a determining result; and
an adjustment unit, configured to receive the determining result from the judging unit, and adjust a schedule weight of the user equipment in the first base station according to the determining result.

**16.** The base station according to claim 15, wherein the adjustment unit comprises:

a decreasing module, configured to: if the service rate obtained from the second base station by the user equipment is greater than the service rate obtained from the first base station, decrease the schedule weight of the user equipment in the first base station; and
an increasing module, configured to: if the service rate obtained from the second base station by the user equipment is not greater than the service rate obtained from the first base station, increase the schedule weight of the user equipment in the first base station.

**17.** The base station according to either of claims 15 and 16, wherein when the cell offset is set on the first carrier, the first base station is a micro base station, and the second base station is a macro base station; when the cell offset is set on the second carrier, the second base station is a micro base station, and the first base station is a macro base station.

**18.** The base station according to any one of claims 15 to 17, wherein the judging unit comprises:

a determining module, configured to determine a schedule weight adjustment parameter of the user equipment according to the first CQI and the first TBS; and
a judging module, configured to determine, according to the schedule weight adjustment parameter, whether the service rate obtained from the second base station by the user equipment is greater than the service rate obtained from the first base station.

**19.** The base station according to claim 18, wherein the judging module is further configured to:

when the schedule weight adjustment parameter is less than a first preset parameter, determine that the service rate obtained from the second base station by the user equipment in the LPN expansion area is not greater than the service rate obtained from the first base station; and when the schedule weight adjustment parameter is greater than a second preset parameter, determine that the service rate obtained from the second base station by the user equipment in the LPN expansion area is greater than the service rate obtained from the first

base station, wherein the second preset parameter is greater than or equal to the first preset parameter.

**20.** The base station according to either of claims 18 and 19, wherein the determining module is further configured to:

determine a reachable rate, which is on the first carrier, of the user equipment based on the first CQI; determine an average throughput rate, which is on the second carrier, of the user equipment based on the first TBS; and determine the schedule weight adjustment parameter based on the average throughput rate and the reachable rate.

**21.** The base station according to claim 20, wherein the determining module determines the schedule weight adjustment parameter based on the following formula:

$$\mathrm{swap}=\tilde{r}_{k,2}\ /\ \overline{c}_{k,1},$$

wherein
swap is the schedule weight adjustment parameter, $\overline{c}_{k,1}$ is the reachable rate, which is on the first carrier, of the user equipment, and $\tilde{r}_{k,2}$ is the average throughput rate, which is on the second carrier, of the user equipment.

**22.** The base station according to claim 20, wherein the determining module determines the schedule weight adjustment parameter according to the following formula:

$$\mathrm{swap}=\frac{\frac{1}{L}-p_k}{\frac{1}{L}}=\left(\frac{1}{L}\sum_k \frac{\tilde{r}_{k,2}}{\overline{c}_{k,1}}\right)^{-1}\cdot L\cdot\frac{\tilde{r}_{k,2}}{\overline{c}_{k,1}}-1,$$

wherein
swap is the schedule weight adjustment parameter, $\overline{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set $U$ that comprises the user equipment.

**23.** The base station according to claim 22, wherein the determining module determines, based on the following formula, the probability of scheduling the user equipment by the first base station:

$$\begin{cases} p_k=\left[\frac{1}{\lambda}-\frac{\tilde{r}_{k,2}}{\overline{c}_{k,1}}\right]^{+}, & k\in U \\ \sum_{k=1}^{L} p_k=1 \end{cases},$$

wherein
$\overline{c}_{k,1}$ is the reachable rate, which is on the first carrier, of the user equipments, $\tilde{r}_{k,2}$ is the average throughput rate, which is on the second carrier, of the user equipment, $p_k$ is the probability of scheduling the user equipment by the first base station, and L is a total quantity of user equipments in a set $U$ that comprises the user equipment.

**24.** The base station according to any one of claims 20 to 23, wherein the determining module is further configured to:

obtain, according to the first CQI, a second TBS that corresponds to the first CQI; determine an average second TBS, which is on the first carrier, of the user equipment in the LPN expansion area based on the second TBS; acquire a unit time length of a subframe; and determine the reachable rate based on the average second TBS and the unit time length of the subframe.

**25.** The base station according to claim 24, wherein the determining module determines the reachable rate based on the following formula:

$$\overline{c}_{k,1} = \frac{\overline{x}_{k,1}}{T_{SF}},$$

wherein
$\overline{c_{k,1}}$ is the reachable rate, which is on the first carrier, of the user equipments, is the average second TBS, which is on the first carrier, of the user equipment, and $T_{SF}$ is the unit time length of the subframe.

**26.** The base station according to any one of claims 16 to 25, wherein the decreasing module decreases the schedule weight of the user equipment in the first base station in the LPN expansion area according to the following formula:

$$w_k = \max(w_k \cdot \beta,\ 1),\quad 0 < \beta < 1;$$

or

$$w_k = w_k \cdot \beta,\quad 0 < \beta < 1,$$

wherein $w_k$ is the schedule weight of the user equipment in the LPN expansion area.

**27.** The base station according to any one of claims 16 to 25, wherein the increasing module increases the schedule weight of the user equipment in the first base station in the LPN expansion area according to the following formula:

$$w_k = w_k / \beta,\quad 0 < \beta < 1,$$

wherein
$w_k$ is the schedule weight of the user equipment in the LPN expansion area.

**28.** The base station according to any one of claims 15 to 27, wherein when the first base station is a macro base station, and the second base station is a micro base station, the acquiring unit comprises:

a first acquiring module, configured to receive the first TBS, which is sent by the user equipment, of the user equipment on a high speed downlink shared control channel HS-SCCH on the second carrier; and/or
a second acquiring module, configured to acquire a second CQI, which is on the second carrier, of the user equipment, and acquire a TBS of the user equipment from the second CQI; and receive a difference TBS, which is sent by the user equipment, of the user equipment on the HS-SCCH on the second carrier, wherein the difference TBS is a difference between the first TBS and the TBS of the user equipment in the second CQI, and determine the first TBS according to a difference between the TBS of the user equipment in the second CQI and the TBS.

**29.** A first base station, applied to a High Speed Downlink Packet Access heterogeneous network HSDPAHet-Net system, comprising:

a transceiver, configured to acquire a first channel quality indicator CQI, which is on a first carrier, of user equipment in a low power node LPN expansion area, and a first transport block size TBS, which is on a second carrier, of the user equipment, wherein the first carrier is used by the user equipment to communicate with the first base station, the second carrier is used by the user equipment to communicate with a second base station, and a cell offset is set on the first carrier or the second carrier; and
a processor, connected to the transceiver, configured to determine, according to the first CQI and the first TBS,

whether a service rate obtained from the second base station by the user equipment is greater than a service rate obtained from the first base station, and obtain a determining result; and adjust a schedule weight of the user equipment in the first base station according to the determining result.

**30.** The base station according to claim 29, wherein the processor is further configured to:

if the service rate obtained from the second base station by the user equipment is greater than the service rate obtained from the first base station, decrease the schedule weight of the user equipment in the first base station; or if the service rate obtained from the second base station by the user equipment is not greater than the service rate obtained from the first base station, increase the schedule weight of the user equipment in the first base station.

**31.** The base station according to either of claims 29 and 30, wherein when the cell offset is set on the first carrier, the first base station is a micro base station, and the second base station is a macro base station; when the cell offset is set on the second carrier, the second base station is a micro base station, and the first base station is a macro base station.

**32.** The base station according to any one of claims 29 to 31, wherein the processor is further configured to:

determine a schedule weight adjustment parameter of the user equipment according to the first CQI and the first TBS; and determine, according to the schedule weight adjustment parameter, whether the service rate obtained from the second base station by the user equipment is greater than the service rate obtained from the first base station.

**33.** The base station according to claim 32, wherein the processor is further configured to:

when the schedule weight adjustment parameter is less than a first preset parameter, determine that the service rate obtained from the second base station by the user equipment in the LPN expansion area is not greater than the service rate obtained from the first base station; and when the schedule weight adjustment parameter is greater than a second preset parameter, determine that the service rate obtained from the second base station by the user equipment in the LPN expansion area is greater than the service rate obtained from the first base station, wherein the second preset parameter is greater than or equal to the first preset parameter.

**34.** The base station according to either of claims 32 and 33, wherein the processor is further configured to:

determine a reachable rate, which is on the first carrier, of the user equipment based on the first CQI; determine an average throughput rate, which is on the second carrier, of the user equipment based on the first TBS; and determine the schedule weight adjustment parameter based on the average throughput rate and the reachable rate.

**35.** The base station according to claim 34, wherein the processor determines the schedule weight adjustment parameter based on the following formula:

$$swap = \tilde{r}_{k,2} \ / \ \overline{c}_{k,1},$$

wherein
swap is the schedule weight adjustment parameter, $\overline{c_{k,1}}$ is the reachable rate, which is on the first carrier, of the user equipment, and $\tilde{r}_{k,2}$ is the average throughput rate, which is on the second carrier, of the user equipment.

**36.** The base station according to claim 34, wherein the processor determines the schedule weight adjustment parameter according to the following formula:

$$\text{swap} = \frac{\frac{1}{L} - p_k}{\frac{1}{L}} = \left(\frac{1}{L}\sum_k \frac{\tilde{r}_{k,2}}{\overline{c}_{k,1}}\right)^{-1} \cdot L \cdot \frac{\tilde{r}_{k,2}}{\overline{c}_{k,1}} - 1,$$

wherein
swap is the schedule weight adjustment parameter, $\overline{c}_{k,1}$ is the reachable rate, which is on the first carrier, of the user equipment, $\tilde{r}_{k,2}$ is the average throughput rate, which is on the second carrier, of the user equipment, $p_k$ is a probability of scheduling the user equipment by the first base station, and L is a total quantity of user equipments in a set $U$ that comprises the user equipment.

**37.** The base station according to claim 36, wherein the processor determines, based on the following formula, the probability of scheduling the user equipment by the first base station:

$$\begin{cases} p_k = \left[\frac{1}{\lambda} - \frac{\tilde{r}_{k,2}}{\overline{c}_{k,1}}\right]^+, & k \in U \\ \sum_{k=1}^{L} p_k = 1 \end{cases},$$

wherein
$\overline{c}_{k,1}$ is the reachable rate, which is on the first carrier, of the user equipments, $\tilde{r}_{k,2}$ is the average throughput rate, which is on the second carrier, of the user equipment, $p_k$ is the probability of scheduling the user equipment by the first base station, and L is a total quantity of user equipments in a set $U$ that comprises the user equipment.

**38.** The base station according to any one of claims 34 to 37, wherein the processor is further configured to:

obtain, according to the first CQI, a second TBS that corresponds to the first CQI; determine an average second TBS, which is on the first carrier, of the user equipment in the LPN expansion area based on the second TBS; acquire a unit time length of a subframe; and determine the reachable rate based on the average second TBS and the unit time length of the subframe.

**39.** The base station according to claim 38, wherein the processor determines the reachable rate based on the following formula:

$$\overline{c}_{k,1} = \frac{\overline{x}_{k,1}}{T_{SF}},$$

wherein
$\overline{c}_{k,1}$ is the reachable rate, which is on the first carrier, of the user equipments, $\overline{x}_{k,1}$ is the average second TBS, which is on the first carrier, of the user equipment, and $T_{SF}$ is the unit time length of the subframe.

**40.** The base station according to any one of claims 30 to 39, wherein the processor decreases the schedule weight of the user equipment in the first base station in the LPN expansion area according to the following formula:

$$w_k = \max(w_k \cdot \beta,\ 1), \quad 0 < \beta < 1;$$

or

$$w_k = w_k \cdot \beta, \quad 0 < \beta < 1,$$

wherein $w_k$ is the schedule weight of the user equipment in the LPN expansion area.

**41.** The base station according to any one of claims 30 to 39, wherein the processor increases the schedule weight of the user equipment in the first base station in the LPN expansion area according to the following formula:

$$w_k = w_k / \beta, \quad 0 < \beta < 1,$$

wherein
$w_k$ is the schedule weight of the user equipment in the LPN expansion area.

**42.** The method according to any one of claims 1 to 13, wherein when the first base station is a macro base station, and the second base station is a micro base station, the processor is further configured to:

receive the first TBS, which is sent by the user equipment, of the user equipment on a high speed downlink shared control channel HS-SCCH on the second carrier; and/or
acquire a second CQI, which is on the second carrier, of the user equipment by using the transceiver, and acquire a TBS of the user equipment from the second CQI; and receive a difference TBS, which is sent by the user equipment, of the user equipment on the HS-SCCH on the second carrier by using the transceiver, wherein the difference TBS is a difference between the first TBS and the TBS of the user equipment in the second CQI, and determine the first TBS according to a difference between the TBS of the user equipment in the second CQI and the TBS.

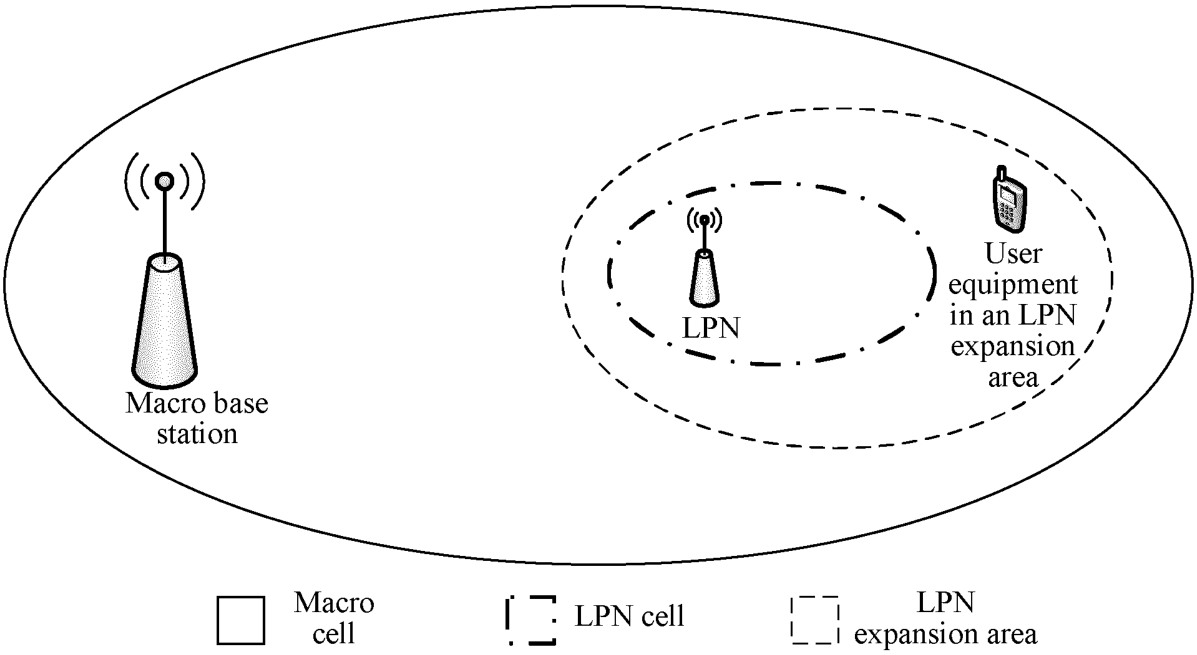
Macro base station
LPN
User equipment in an LPN expansion area
Macro cell
LPN cell
LPN expansion area

FIG. 1

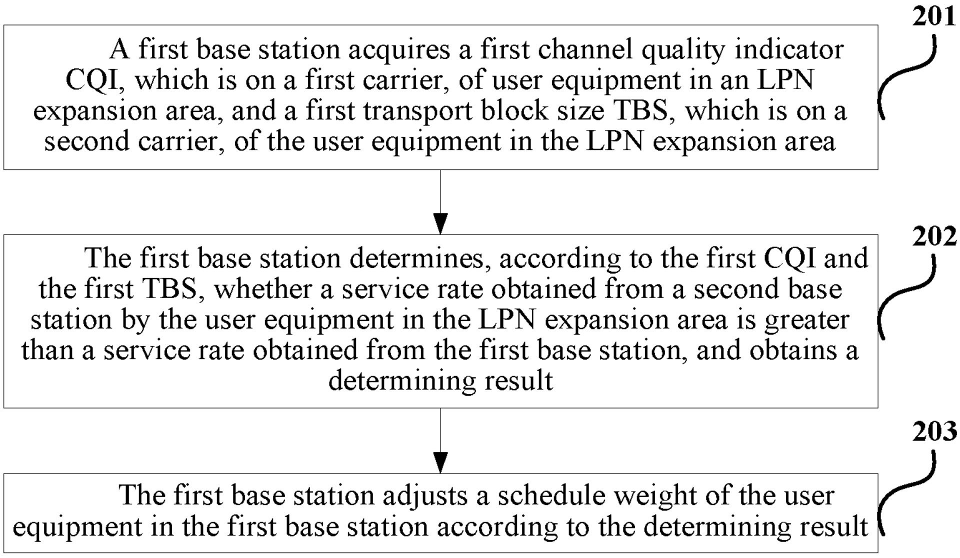
A first base station acquires a first channel quality indicator CQI, which is on a first carrier, of user equipment in an LPN expansion area, and a first transport block size TBS, which is on a second carrier, of the user equipment in the LPN expansion area
201
The first base station determines, according to the first CQI and the first TBS, whether a service rate obtained from a second base station by the user equipment in the LPN expansion area is greater than a service rate obtained from the first base station, and obtains a determining result
202
The first base station adjusts a schedule weight of the user equipment in the first base station according to the determining result
203

FIG. 2

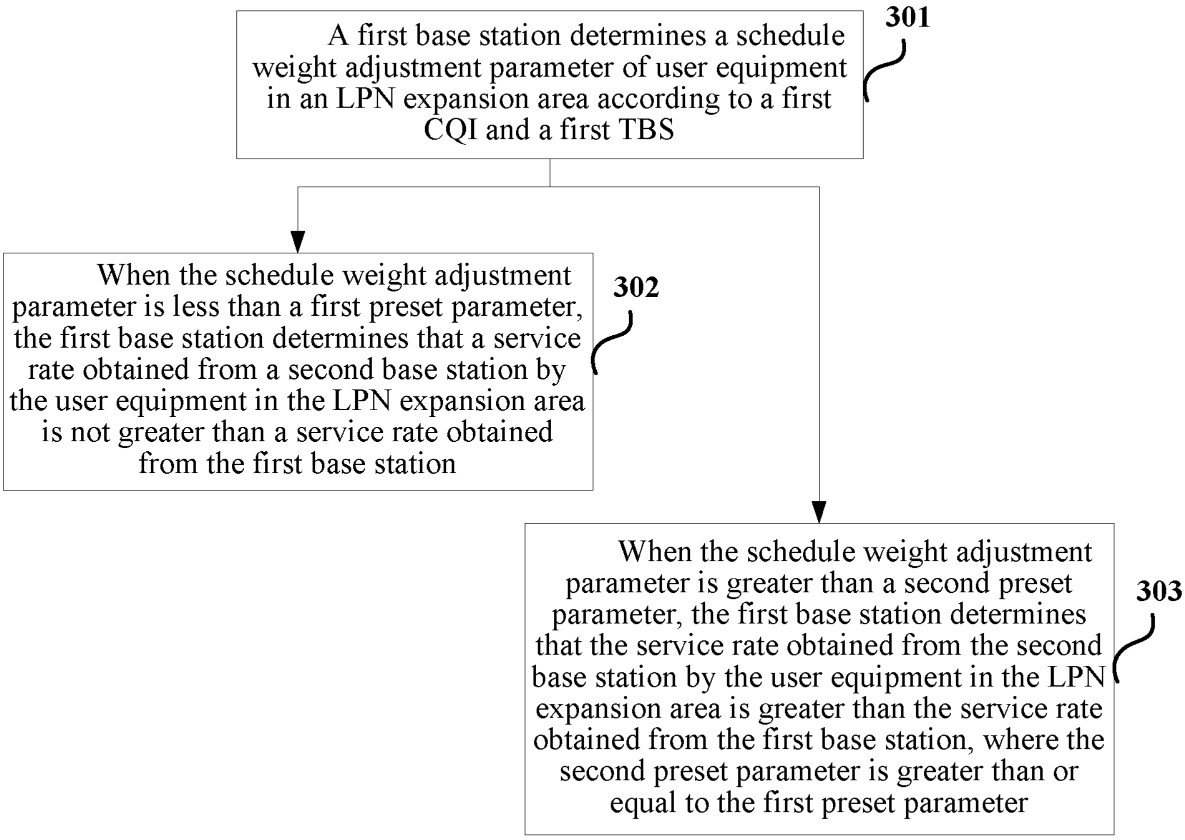
A first base station determines a schedule weight adjustment parameter of user equipment in an LPN expansion area according to a first CQI and a first TBS
301
When the schedule weight adjustment parameter is less than a first preset parameter, the first base station determines that a service rate obtained from a second base station by the user equipment in the LPN expansion area is not greater than a service rate obtained from the first base station
302
When the schedule weight adjustment parameter is greater than a second preset parameter, the first base station determines that the service rate obtained from the second base station by the user equipment in the LPN expansion area is greater than the service rate obtained from the first base station, where the second preset parameter is greater than or equal to the first preset parameter
303

FIG. 3

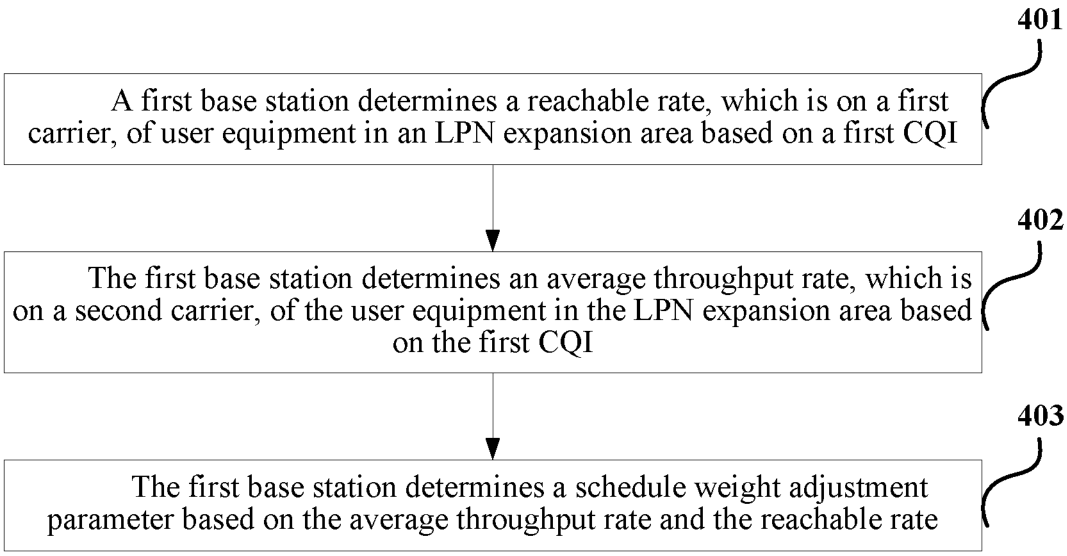
401
A first base station determines a reachable rate, which is on a first carrier, of user equipment in an LPN expansion area based on a first CQI
402
The first base station determines an average throughput rate, which is on a second carrier, of the user equipment in the LPN expansion area based on the first CQI
403
The first base station determines a schedule weight adjustment parameter based on the average throughput rate and the reachable rate

FIG. 4

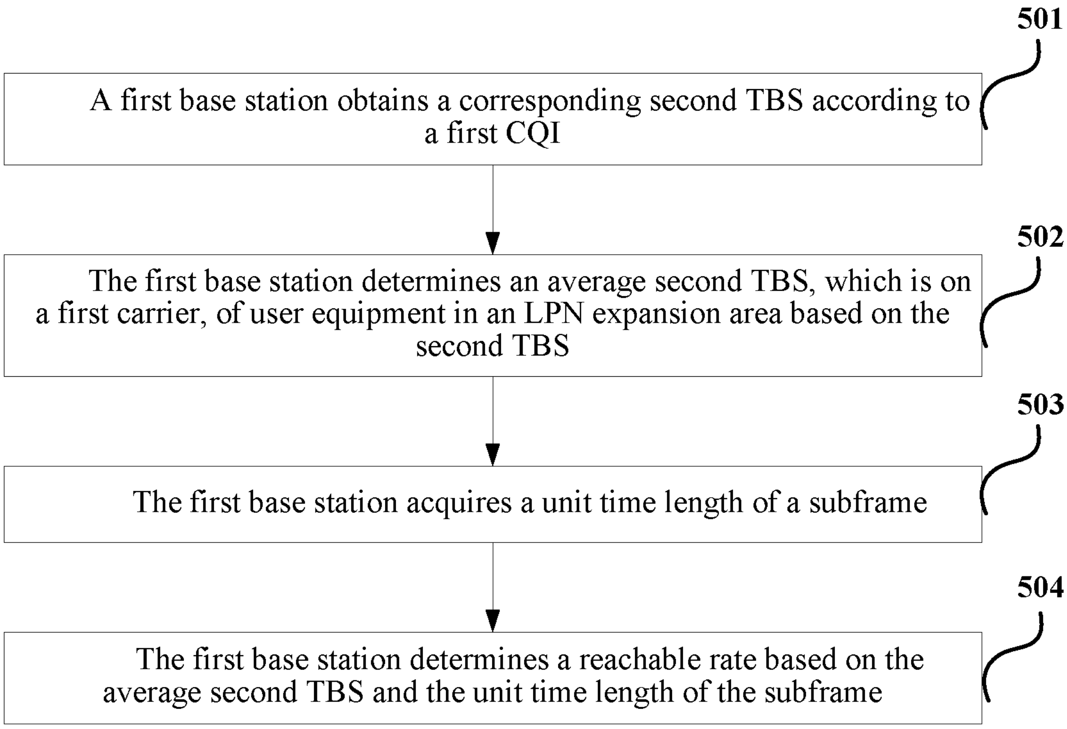
501
A first base station obtains a corresponding second TBS according to a first CQI
502
The first base station determines an average second TBS, which is on a first carrier, of user equipment in an LPN expansion area based on the second TBS
503
The first base station acquires a unit time length of a subframe
504
The first base station determines a reachable rate based on the average second TBS and the unit time length of the subframe

FIG. 5

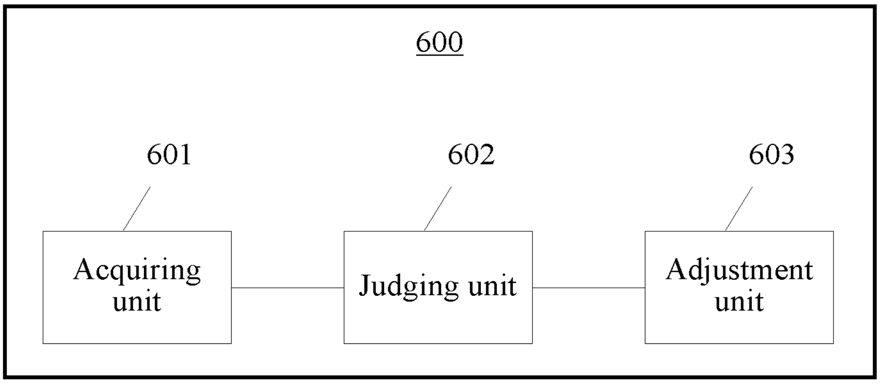
600
601
602
603
Acquiring unit
Judging unit
Adjustment unit

FIG. 6

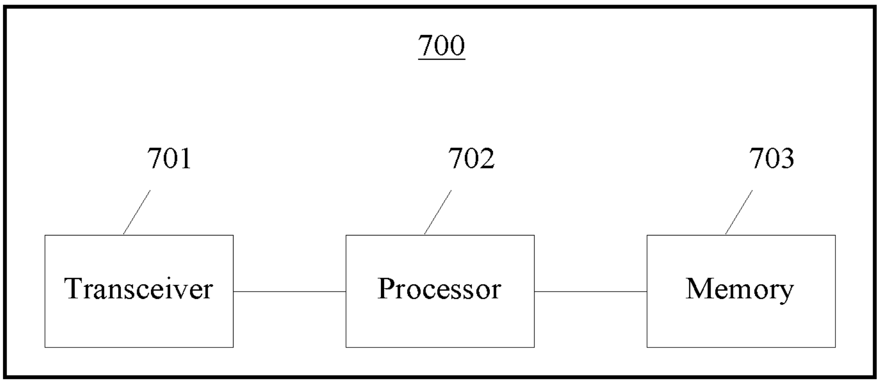
700
701
702
703
Transceiver
Processor
Memory

FIG. 7

# INTERNATIONAL SEARCH REPORT

International application No.
**PCT/CN2013/090367**

**A. CLASSIFICATION OF SUBJECT MATTER**

H04W 24/10 (2009.01) i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CPRSABS, CNTXT, CNKI: heterogeneous, low power, scheduling, weight, LPN, CQI user equipment, base station, micro base station, macro base station, carrier, cell, bias, TBS, rate, service rate

VEN: HET W NET, LOW W POWER, SCHEDUL+, LPN, CQI, UE, STATION, PICO W STATION, MICRO W STATION, CARRIER?, CELL?, BIAS, TBS, RATE, SERVICE W RATE

**C. DOCUMENTS CONSIDERED TO BE RELEVANT**

| Category* | Citation of document, with indication, where appropriate, of the relevant passages | Relevant to claim No. |
|---|---|---|
| A | CN 103339982 A (TELEFONAKTIEBOLAGET L M ERICSSON), 02 October 2013 (02.10.2013), description, paragraphs 20-22 and 66-86 | 1-42 |
| A | CN 103039107 A (LG ELECTRONICS INC.), 10 April 2013 (10.04.2013), the whole document | 1-42 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| 10 September 2014 (10.09.2014) | **19 September 2014 (19.09.2014)** |

| Name and mailing address of the ISA/CN | Authorized officer |
|---|---|
| State Intellectual Property Office of the P. R. China<br>No. 6, Xitucheng Road, Jimenqiao<br>Haidian District, Beijing 100088, China<br>Facsimile No.: (86-10) 62019451 | **FU, Lingxiao**<br>Telephone No.: (86-10) **62089452** |

Form PCT/ISA/210 (second sheet) (July 2009)

# INTERNATIONAL SEARCH REPORT
Information on patent family members

International application No.
**PCT/CN2013/090367**

| Patent Documents referred in the Report | Publication Date | Patent Family | Publication Date |
|---|---|---|---|
| CN 103339982 A | 02 October 2013 | US 2012201163 A1 | 09 August 2012 |
| | | WO 2012108805 A1 | 16 August 2012 |
| | | EP 2673977 A1 | 18 December 2013 |
| CN 103039107 A | 10 April 2013 | WO 2011122833 A2 | 06 October 2011 |
| | | WO 2011122833 A3 | 26 January 2012 |
| | | KR 20130018220 A | 20 February 2013 |
| | | US 2013033998 A1 | 07 February 2013 |
| | | AU 2011233858 A1 | 07 June 2012 |
| | | CA 2784035 A1 | 06 October 2011 |
| | | JP 2013524616 A | 17 June 2013 |
| | | EP 2553970 A2 | 06 February 2013 |
| | | IN 201204341 P4 | 21 February 2014 |

Form PCT/ISA/210 (patent family annex) (July 2009)